# EUROPÄISCHE PATENTSCHRIFT

(11) **EP 3 538 584 B1**
(45) Veröffentlichungstag und Bekanntmachung des Hinweises auf die Patenterteilung: **26.08.2020**
(21) Anmeldenummer: 17797645.3
(22) Anmeldetag: 14.11.2017
(51) Int. Cl.: C08G 18/62, C08G 18/72, C08G 18/73, C08G 18/79, C08G 18/81, C08G 18/02, C08G 18/22, B33Y 10/00

(54) **VERFAHREN ZUR HERSTELLUNG EINES GEGENSTANDES AUS EINEM VORLÄUFER UND VERWENDUNG EINES RADIKALISCH VERNETZBAREN HARZES IN EINEM ADDITIVEN FERTIGUNGSVERFAHREN**
METHOD OF MAKING AN OBJECT FROM A PRECURSOR AND USE OF A RESIN WHICH CAN BE RADICALLY CROSSLINKED BY MEANS OF AN ADDITIVE PRODUCTION METHOD
PROCÉDÉ DE FABRICATION D'UN OBJET À PARTIR D'UN PRÉCURSEUR ET UTILISATION D'UNE RÉSINE RÉTICULABLE PAR VOIE RADICALAIRE DANS UN PROCÉDÉ DE FABRICATION ADDITIVE

(30) Priorität: 14.11.2016 EP 16198688
(43) Veröffentlichungstag der Anmeldung: 18.09.2019
(73) Patentinhaber: Covestro Deutschland AG, 51373 Leverkusen (DE)
(72) Erfinder: ACHTEN, Dirk, 51375 Leverkusen (DE); BÜSGEN, Thomas, 51377 Leverkusen (DE); TILLACK, Jörg, 42699 Solingen (DE); LUDEWIG, Michael, 51519 Odenthal (DE); TOMCZYK, Christoph, 51379 Leverkusen (DE); WAGNER, Roland, 51375 Leverkusen (DE)
(74) Vertreter: Levpat
(86) Internationale Anmeldenummer: PCT/EP2017/079155
(87) Internationale Veröffentlichungsnummer: WO 2018/087382

(56) Entgegenhaltungen:
- US-A- 4 128 537
- US-A1- 2001 038 917
- US-A1- 2008 145 624
- US-A1- 2014 017 460
- US-B1- 6 335 381

## Beschreibung

Die vorliegende Erfindung betrifft ein Verfahren zur Herstellung eines Gegenstandes aus einem Vorläufer, umfassend die Schritte:
I) Abscheiden eines radikalisch vernetzten Harzes auf einem Träger, so dass eine Lage eines mit dem Träger verbundenen Aufbaumaterials erhalten wird, welche einem ersten ausgewählten Querschnitt des Vorläufers entspricht;
II) Abscheiden eines radikalisch vernetzten Harzes auf eine zuvor aufgetragene Lage des Aufbaumaterials, so dass eine weitere Lage des Aufbaumaterials erhalten wird, welche einem weiteren ausgewählten Querschnitt des Vorläufers entspricht und welche mit der zuvor aufgetragenen Lage verbunden ist;
III) Wiederholen des Schritts II), bis der Vorläufer gebildet ist;
wobei das Abscheiden eines radikalisch vernetzten Harzes wenigstens in Schritt II) durch Belichten und/oder Bestrahlen eines ausgewählten Bereichs eines radikalisch vernetzbaren Harzes, entsprechend dem jeweils ausgewählten Querschnitt des Vorläufers, erfolgt und wobei das radikalisch vernetzbare Harz eine Viskosität, gemessen bei 23 °C gemäß DIN EN ISO 2884-1, von ≥ 5 mPas bis ≤ 100000 mPas aufweist.

Die Erfindung betrifft weiterhin die Verwendung eines radikalisch vernetzbaren Harzes, welches eine Viskosität bei 23 °C gemessen mit einem Wells/Brookfield Kegel-Platte-Viskosimeter nach DIN EN ISO 2884-1) von ≥ 5 mPas bis ≤ 100000 mPas aufweist, in einem additiven Fertigungsverfahren, wobei das Harz eine härtbare Verbindung umfasst, welche Isocyanuratgruppen, NCO-Gruppen und olefinische C=C-Doppelbindungen aufweist. Schließlich betrifft die Erfindung ein Polymer, das aus der Vernetzung eines solchen Harzes erhältlich ist.

Polymere mit Polyisocyanuratstruktur sind für ihre hohe Temperatur- und Flammbeständigkeit bekannt. Polyisocyanurat-haltige Schäume (PUR/PIR-Schäume) auf Basis des aromatischen Diphenylmethan-4,4'-diisocyanats (MDI) sowie Polyetherpolyolen und Polyepoxiden, sind beispielsweise aufgrund ihrer sehr niedrigen Wärmeleitfähigkeit insbesondere als Hochleistungsdämmstoffe weit verbreitet.

Praktische Anwendungen finden Polyisocyanurate auch als Vernetzungsmittel in der Lackchemie, bei deren Herstellung die Trimerisierungsreaktion bereits bei niedrigen Umsätzen gestoppt wird und überschüssiges nicht abreagiertes monomeres Diisocyanat entfernt wird. So sehen DE 31 00 263 GB 952 931, GB 966 338, US 3,211,703 oder US 3,330,828 bei der Herstellung von Vernetzungsmitteln auf Basis von Isocyanuraten ausgehend von aliphatischen und gemischt aliphatischen und aromatischen monomeren Diisocyanaten entweder eine Durchführung der Reaktion in Verdünnung oder nur bis zu niedrigen Umsatzwerten bei sehr genauer Temperaturkontrolle vor. Dabei entstehen gezielt keine vernetzten Polyisocyanuratkunststoffe sondern nur oligomere, niedrigviskose, lösliche Produkte. US 6,133,397 offenbart eine Beschichtungszusammensetzung mit einem niedrigen Gehalt an flüchtigen organischen Verbindungen und einer Viskosität (ZAHN-Becher 2) von weniger als ca. 200 Sekunden. Die Zusammensetzung besteht im Wesentlichen aus wenigstens einem aliphatischen Polyisocyanat, einem Lösungsmittel in einer Menge zwischen 0% und 45%, bezogen auf das Gewicht des Polyisocyanats in der Zusammensetzung, und einem Trimerisierungskatalysator. Die Zusammensetzung ist im Wesentlichen frei von flüchtigen Mono- und Diisocyanaten.

Isocyanurate, welche auf der Basis von Isocyanaten mit einer NCO-Funktionalität von mehr als 2 aufgebaut sind, weisen noch freie NCO-Gruppen auf, welche durch Folgereaktionen weiter funktionalisiert werden können.

EP 0 000 658 A1 offenbart ein Verfahren zur Herstellung eines ethylenisch ungesättigten Isocyanurats, in dem ein Polyisocyanat mit einer Hydroxylkomponente umgesetzt wird, die einen einwertigen Alkohol enthält, der eine Vinylidengruppe enthält und der keine Allylgruppe enthält, wobei die Reaktion in Gegenwart eines Kupfersalzes durchgeführt wird, um ein isocyanathaltiges Urethan zu erhalten, wobei die Mengen der Hydroxylkomponente und des Polyisocyanats so gewählt werden, dass nach der genannten Umsetzung 0,75 bis 1,6 Mol nicht-umgesetzte Isocyanatgruppen je Mol verwendetes Polyisocyanat erhalten werden. Es wird anschließend eine katalytische Menge eines Isocyanat-Trimerisierungskatalysators, der die Trimerisierung des isocyanathaltigen Urethans ohne Verursachung einer Gelierung initiiert, so dass das isocyanathaltige Urethan trimerisiert wird, um ein ethylenisch ungesättigtes Isocyanurat herzustellen. Gemäß einer Ausführungsform kann der einwertige Alkohol Hydroxypropylmethacrylat, Hydroxypropylacrylat, Hydroxyethylmethacrylat, Hydroxyethylacrylat, Pentaerythrittriacrylat, Pentaerythrittrimethacrylat oder ein Gemisch davon sein.

EP 0 315 020 A2 betrifft ein Verfahren zur Herstellung von Isocyanuratgruppen und olefinische Doppelbindungen aufweisenden Verbindungen durch Umsetzung von a) einer, Isocyanuratgruppen aufweisende Polyiso-cyanate enthaltenden, Polyisocyanat-Komponente mit b) einer olefinisch ungesättigten Alkoholkomponente, bestehend aus mindestens einem Hydroxyalkylester der Acrylsäure oder der Methacrylsäure, dadurch gekennzeichnet, dass man a) als Polyisocyanatkomponente (i) gegebenenfalls im Gemisch mit seinen höheren, mehr als einem Isocyanuratring aufweisenden Homologen vorliegendes N,N',N"-Tris-(isocyanatohexyl)-isocyanurat oder (ii) Gemische der unter (i) genannten Polyisocyanate mit bis zu 40 NCO-Äquivalent-%, bezogen auf die gesamte Komponente a) an anderen Polyisocyanaten mit aliphatisch und/oder cycloaliphatisch gebundenen Isocyanatgruppen verwendet und die Umsetzung unter Mitverwendung von c) einer Polyolkomponente, bestehend im Wesentlichen aus einem Polyesterpolyol der OH-Zahl 80 bis 350 auf Basis von (i) einer Säurekomponente, bestehend zu mindestens 80 Carboxyl-Äquivalent-% aus Adipinsäure und/oder Isophthalsäure und (ii) einer Polyolkomponente, bestehend zumindest zu 70 Hydroxyläquivalent-% aus 1,6-Hexandiol durchführt, wobei die Menge der Komponente c) 20 bis 150 Gew.-%, bezogen auf das Gewicht der Komponente b), ausmacht und die Umsetzung unter Einhaltung eines NCO/OH-Äquivalentverhältnisses von 0,9:1 bis 1,1:1 durchführt, wobei die alkoholischen Komponenten b) und c) mit der Polyisocyanatkomponente in beliebiger Reihenfolge oder in Abmischung umgesetzt werden. Gemäß einer Ausführungsform wird als Komponente b) 2-Hydroxyethylacrylat, 2-Hydroxyethylmethacrylat, 2-Hydroxypropylacrylat, 2-Hydroxypropylmethacrylat oder beliebige Gemische dieser Verbindungen verwendet.

EP 0 347 610 A2 beschreibt UV-härtbare Mischungen, die A) 15 - 60 Gew.-%, bezogen auf die Gewichtssumme von 100 Gew.-% aus A) + B) + C) an Umsetzungsprodukten von Hydroxyalkylacrylaten mit aliphatischen Polyisocyanaten, die wenigstens 2 Isocyanatgruppen und wenigstens eine Uretdion- und/oder Triisocyanurat- und/oder Biuretgruppe pro Molekül enthalten; B) 30 - 84 Gew.-%, bezogen auf die Gewichtssumme von 100 Gew.-% aus A) + B) + C), an di- oder trifunktionellen (Meth)acrylaten mit einem Molekulargewicht unter 500; C) 1 - 10 Gew.-%, bezogen auf die Gewichtssumme von 100 Gew.-% aus A) + B) + C), an Verbindungen mit einer polymerisierbaren Gruppe pro Molekül und einem Molekulargewicht unter 200, und D) Photoinitiatoren in üblichen Mengen, bezogen auf die Gewichtssumme von 100 Gew.-% aus A) + B) + C), enthalten. In den Mischungen kann die Komponente A) Umsetzungsprodukte von Hydroxyethylacrylat mit dem Uretdion- und/oder Triisocyanurat- und/oder Biuret auf Basis Hexamethylendiisocyanat darstellen.

US 4,145,544 offenbart ein Verfahren zur Herstellung eines ethylenisch ungesättigten Isocyanurats umfassend die Schritte (1) Trimerisierung eines aromatischen Polyisocyanats unter Bildung eines NCO enthaltenden Isocyanurats, wobei die Trimerisierung in Gegenwart eines Isocyanat-Trimerisierungskatalysators und eines Lösungsmittels durchgeführt wird; sowie (2) Reaktion der in den NCO enthaltenden Isocyanurat vorliegenden NCO-Gruppen mit der Hydroxylgruppe eines monohydrischen Alkohols, der eine Vinylidengruppe enthält, in Gegenwart eines Lösungsmittels unter Bildung eines ethylenisch ungesättigten Isocyanurats. Als Lösungsmittel in Schritt (1) und (2) wird ein Vinyliden-Lösungsmittel eingesetzt, das frei von mit Isocyanatgruppen reagierenden Gruppen ist und welches mindestens 20 Gewichts-% eines ethylenisch ungesättigten polaren Lösungsmittels enthält. In einer Ausführungsform ist der monohydrische Alkohol Hydroxypropylmethacrylat, Hydroxypropylacrylat, Hydroxyethylmethacrylat, Hydroxyethylacrylat oder deren Mischungen.

US 4,159,376 betrifft ein Verfahren zur Herstellung eines ethylenisch ungesättigten Isocyanurats umfassend einen ersten Schritt der Reaktion eines aromatischen Polyisocyanats mit einem monohydrischen Alkohol enthaltend eine Vinylidengruppe, der ausgewählt ist aus Hydroxypropylmethacrylat, Hydroxypropylacrylat, Hydroxyethylmethacrylat, Hydroxyethylacrylat oder deren Mischungen, unter Bildung eines Monoisocyanat-enthaltenden Urethans und umfassend einen zweiten Schritt der Reaktion des Monoisocyanat-enthaltenden Urethans mit Tris(2-hydroxyethyl)isocyanurat unter Erhalt eines ethylenisch ungesättigten Isocyanurats.

Eine Aufgabe der vorliegenden Erfindung ist es, mindestens einen Nachteil des Standes der Technik wenigstens zu einem Teil zu überwinden. Weiterhin stellt sich die Erfindung die Aufgabe, ein additives Fertigungsverfahren bereitzustellen, bei dem die hergestellten Gegenstände gleichzeitig eine hohe Auflösung und eine hohe Festigkeit aufweisen können. Schließlich ist eine Aufgabe der Erfindung, solche Gegenstände möglichst kosteneffizient und/oder individualisiert und/oder ressourcenschonend herstellen zu können.

Erfindungsgemäß gelöst wird die Aufgabe durch ein Verfahren gemäß Anspruch 1 und eine Verwendung gemäß Anspruch 11. Ein durch die Vernetzung des angegebenen Harzes erhältliches Polymer ist Gegenstand des Anspruch 14. Vorteilhafte Weiterbildungen sind in den Unteransprüchen angegeben. Sie können beliebig kombiniert werden, sofern sich aus dem Kontext nicht eindeutig das Gegenteil ergibt

Ein Verfahren zur Herstellung eines Gegenstandes aus einem Vorläufer umfasst die Schritte:
I) Abscheiden eines radikalisch vernetzten Harzes auf einem Träger, so dass eine Lage eines mit dem Träger verbundenen Aufbaumaterials erhalten wird, welche einem ersten ausgewählten Querschnitt des Vorläufers entspricht;
II) Abscheiden eines radikalisch vernetzten Harzes auf eine zuvor aufgetragene Lage des Aufbaumaterials, so dass eine weitere Lage des Aufbaumaterials erhalten wird, welche einem weiteren ausgewählten Querschnitt des Vorläufers entspricht und welche mit der zuvor aufgetragenen Lage verbunden ist;
III) Wiederholen des Schritts II), bis der Vorläufer gebildet ist;
wobei das Abscheiden eines radikalisch vernetzten Harzes wenigstens in Schritt II) durch Belichten und/oder Bestrahlen eines ausgewählten Bereichs eines radikalisch vernetzbaren Harzes, entsprechend dem jeweils ausgewählten Querschnitt des Vorläufers, erfolgt und
wobei das radikalisch vernetzbare Harz eine Viskosität, gemessen bei 23 °C gemäß DIN EN ISO 2884-1, von ≥ 5 mPas bis ≤ 100000 mPas aufweist.

In dem Verfahren umfasst das radikalisch vernetzbare Harz eine härtbare Komponente, in der NCO-Gruppen und olefinische C=C-Doppelbindungen vorliegen, wobei in der härtbaren Komponente das molare Verhältnis von NCO-Gruppen und olefinischen C=C-Doppelbindungen in einem Bereich von ≥ 1:5 bis ≤ 5:1 liegt.

In dem Verfahren wird weiterhin nach Schritt III) weiterhin Schritt IV) durchgeführt:
IV) Behandeln des nach Schritt III) erhaltenen Vorläufers bei Bedingungen, die ausreichen, um im radikalisch vernetzten Harz des erhaltenen Vorläufers vorliegende NCO-Gruppen zumindest teilweise zu Isocyanurat-Gruppen zu trimerisieren, so dass der Gegenstand erhalten wird.

Ferner umfasst in dem Verfahren die härtbare Komponente eine härtbare Verbindung, welche NCO-Gruppen und olefinische C=C-Doppelbindungen aufweist, wobei in der härtbaren Verbindung das molare Verhältnis von NCO-Gruppen und olefinischen C=C-Doppelbindungen in einem Bereich von ≥1:5 bis ≤ 5:1 (bevorzugt ≥ 1:4 bis ≤ 4:1, mehr bevorzugt ≥ 1:3 bis ≤ 3:1) liegt. Diese Verbindung enthält somit die zwei genannten Gruppen in einem Molekül.

Im erfindungsgemäßen Verfahren wird somit der Gegenstand in zwei Herstellungsabschnitten erhalten. Der erste Herstellungsabschnitt kann als Aufbauabschnitt angesehen werden. Dieser Aufbauabschnitt lässt sich mittels strahlenoptischer additiver Fertigungsverfahren wie dem Inkjet-Verfahren, der Stereolithographie oder dem DLP (digital light processing)-Verfahren realisieren und ist Gegenstand der Schritte I), II) und III). Der zweite Herstellungsabschnitt kann als Härtungsabschnitt angesehen werden und ist Gegenstand des Schritts IV). Hier wird der nach dem Aufbauabschnitt erhaltene Vorläufer oder intermediäre Gegenstand ohne seine Form weiter zu verändern in einen mechanisch dauerhafteren Gegenstand überführt. Das Material, aus dem der Vorläufer im additiven Fertigungsverfahren erhalten wird, wird im Rahmen der vorliegenden Erfindung allgemein als "Aufbaumaterial" bezeichnet.

In Schritt I) des Verfahrens erfolgt das Abscheiden eines radikalisch vernetzten Harzes auf einem Träger. Dieses ist gewöhnlich der erste Schritt in Inkjet-, Stereolithographie- und DLP-Verfahren. Auf diese Weise wird eine Lage eines mit dem Träger verbundenen Aufbaumaterials erhalten, welche einem ersten ausgewählten Querschnitt des Vorläufers entspricht.

Gemäß der Anweisung von Schritt III) wird Schritt II) so lange wiederholt, bis der gewünschte Vorläufer gebildet ist. In Schritt II) erfolgt das Abscheiden eines radikalisch vernetzten Harzes auf eine zuvor aufgetragene Lage des Aufbaumaterials, so dass eine weitere Lage des Aufbaumaterials erhalten wird, welche einem weiteren ausgewählten Querschnitt des Vorläufers entspricht und welche mit der zuvor aufgetragenen Lage verbunden ist. Bei der zuvor aufgetragenen Lage des Aufbaumaterials kann es sich um die erste Lage aus Schritt I) oder um eine Lage aus einer vorigen Durchlauf des Schritts II) handeln.

Es ist erfindungsgemäß vorgesehen, dass das Abscheiden eines radikalisch vernetzten Harzes wenigstens in Schritt II) (vorzugsweise auch in Schritt I) durch Belichten und/oder Bestrahlen eines ausgewählten Bereichs eines radikalisch vernetzbaren Harzes, entsprechend dem jeweils ausgewählten Querschnitt des Gegenstandes, erfolgt. Dieses kann sowohl durch selektives Belichten (Stereolithographie, DLP) des Harzes als auch durch selektives Auftragen des Harzes, gefolgt von einem Belichtungsschritt, der aufgrund des vorigen selektiven Auftragens des Harzes nicht mehr selektiv sein muss (Inkjet-Verfahren).

Im Kontext der vorliegenden Erfindung werden die Begriffe "radikalisch vernetzbares Harz" und "radikalisch vernetztes Harz" benutzt. Hierbei wird das radikalisch vernetzbare Harz durch das Belichten und/oder Bestrahlen, welches radikalische Vernetzungsreaktionen auslöst, in das radikalisch vernetzte Harz überführt. Unter "Belichten" wird hierbei die Einwirkung von Licht im Bereich zwischen nahem IR- und nahem UV-Licht (1400 nm bis 315 nm Wellenlänge) verstanden. Die übrigen kürzeren Wellenlängenbereiche werden durch den Begriff "Bestrahlen" abgedeckt, zum Beispiel fernes UV-Licht, Röntgenstrahlung, Gammastrahlung und auch Elektronenstrahlung.

Das Auswählen des jeweiligen Querschnitts erfolgt zweckmäßigerweise durch ein CAD-Programm, mit dem ein Modell des herzustellenden Gegenstandes erzeugt wurde. Diese Operation wird auch "Slicing" genannt, und dient als Grundlage für die Steuerung der Belichtung und/oder Bestrahlung des radikalisch vernetzbaren Harzes.

Das radikalisch vernetzbare Harz weist eine Viskosität, gemessen bei 23 °C gemäß DIN EN ISO 2884-1, von ≥ 5 mPas bis ≤ 100000 mPas auf. Somit ist es zumindest für die Zwecke der additiven Fertigung als flüssiges Harz anzusehen. Vorzugsweise beträgt die Viskosität ≥ 50 mPas bis ≤ 10000 mPas, mehr bevorzugt ≥ 500 mPas bis ≤ 1000 mPas.

Weiterhin umfasst in dem Verfahren das radikalisch vernetzbare Harz eine härtbare Komponente, in der NCO-Gruppen und olefinische C=C-Doppelbindungen vorliegen, wobei in der härtbaren Komponente das molare Verhältnis von NCO-Gruppen und olefinischen C=C-Doppelbindungen in einem Bereich von ≥ 1:5 bis ≤ 5:1 (bevorzugt ≥ 1:4 bis ≤ 4:1, mehr bevorzugt ≥ 1:3 bis ≤ 3:1) liegt. Das molekulare Verhältnis dieser funktionellen Gruppen lässt sich durch die Integration der Signale einer Probe im ¹³C-NMR-Spektrum ermitteln.

Neben der härtbaren Komponente kann das radikalisch vernetzbare Harz auch eine nicht härtbare Komponente umfassen, in der beispielsweise Stabilisatoren, Füllstoffe und dergleichen zusammengefasst sind.

In dem Verfahren wird weiterhin nach Schritt III) weiterhin Schritt IV) durchgeführt. In diesem Schritt erfolgt das Behandeln des nach Schritt III) erhaltenen Vorläufers bei Bedingungen, die ausreichen, um im radikalisch vernetzten Harz des erhaltenen Vorläufers vorliegende NCO-Gruppen zumindest teilweise zu Isocyanurat-Gruppen zu trimerisieren, so dass der Gegenstand erhalten wird.

Das Behandeln in Schritt IV) kann im einfachsten Fall ein Lagern bei Raumtemperatur (20 °C) sein. Es ist auch möglich, bei einer Temperatur oberhalb der Raumtemperatur zu lagern. Während des Schritts IV) reagieren die NCO-Gruppen miteinander unter weiterer Vernetzung des zuvor schon radikalisch vernetzten Materials. Diese Reaktion führt zumindest teilweise zur Trimerisierung zu Isocyanurat-Gruppen. Es ist erfindungsgemäß mit eingeschlossen, dass auch Uretdion-, Allophanat-, Urea-, Urethan-, Biuret-, Iminooxadiazindion- und/oder Oxadiazintriongruppen aus den NCO-Gruppen gebildet werden können. Solche Nebenreaktionen können gezielt eingesetzt werden, um beispielsweise die Glasübergangstemperatur T_{g} des erhaltenen Materials zu beeinflussen.

Vorzugsweise wird die Reaktion durchgeführt, bis ≤ 20%, bevorzugt ≤ 10% und mehr bevorzugt ≤ 5% der ursprünglich in der härtbaren Komponente vorhandenen NCO-Gruppen noch vorhanden sind. Dieses lässt sich mittels quantitativer IR-Spektroskopie bestimmen. Es ist weiter bevorzugt, dass in Schritt IV) ≥ 50%, ≥ 60%, ≥ 70% oder ≥ 80%, der in der härtbaren Komponente vorliegenden Isocyanatgruppen in Isocyanurat-Gruppen überführt werden.

Es ist bevorzugt, dass Schritt IV) erst dann durchgeführt wird, wenn das gesamte Aufbaumaterial des Vorläufers seinen Gelpunkt erreicht hat. Der Gelpunkt wird als erreicht angesehen, wenn in einer dynamisch-mechanischen Analyse (DMA) mit einem Platte/Platte-Oszillationsviskosimeter gemäß ISO 6721-10 bei 20 °C sich die Graphen des Speichermoduls G' und des Verlustmoduls G" kreuzen. Gegebenenfalls wird der Vorläufer weiterer Belichtung und/oder Bestrahlung zur Vervollständigung der radikalischen Vernetzung ausgesetzt. Das radikalisch vernetzte Harz kann ein Speichermodul G' (DMA, Platte/Platte-Oszillationsviskosimeter gemäß ISO 6721-10 bei 20 °C und einer Scherrate von 1/s) von ≥ 10⁶ Pa aufweisen.

Das radikalisch vernetzbare Harz kann weiterhin Additive wie Füllstoffe, UV-Stabilisatoren, Radikalinhibitoren, Antioxidantien, Formtrennmittel, Wasserfänger, Slipadditive, Entschäumer, Verlaufsmittel, Rheologieadditive, Flammschutzmittel und/oder Pigmente enthalten. Diese Hilfs- und Zusatzmittel, ausgenommen Füllstoffe und Flammschutzmittel, liegen üblicherweise in einer Menge von weniger als 10 Gew.-%, vorzugsweise weniger als 5 Gew.-%, besonders bevorzugt bis zu 3 Gew.-%, bezogen auf das radikalisch vernetzbare Harz vor. Flammschutzmittel liegen üblicherweise in Mengen von höchstens 70 Gew.-%, vorzugsweise höchstens 50 Gew.-%, besonders bevorzugt höchstens 30 Gew.-%, berechnet als Gesamtmenge an eingesetzten Flammschutzmitteln bezogen auf das Gesamtgewicht des radikalisch vernetzbaren Harzes vor.

Geeignete Füllstoffe sind beispielsweise AlOH₃, CaCO₃, Metallpigmente wie TiO₂ und weitere bekannte übliche Füllstoffe. Diese Füllstoffe werden vorzugsweise in Mengen von höchstens 70 Gew.-%, bevorzugt höchstens 50 Gew.-%, besonders bevorzugt höchstens 30 Gew.-%, berechnet als Gesamtmenge an eingesetzten Füllstoffen bezogen auf das Gesamtgewicht des radikalisch vernetzbaren Harzes, eingesetzt.

Geeignete UV-Stabilisatoren können vorzugsweise ausgewählt werden aus der Gruppe, bestehend aus Piperidinderivaten, wie z.B. 4-Benzoyloxy-2,2,6,6-tetramethylpiperidin, 4-Benzoyloxy-1,2,2,6,6-pentamethylpiperidin, Bis-(2,2,6,6-tetra-methyl-4-piperidyl)-sebacat, Bis(1,2,2,6,6-pentamethyl-1-4-piperidinyl)-sebacat, Bis-(2,2,6,6-tetramethyl-4-piperidyl)-suberat, Bis-(2,2,6,6-tetramethyl-4-piperidyl)-dodecandioat; Benzophenonderivaten, wie z.B. 2,4-Dihydroxy-, 2-Hydroxy-4-methoxy-, 2-Hydroxy-4-octoxy-, 2-Hydroxy-4-dodecyloxy- oder 2,2'-Dihydroxy-4-dodecyloxy-benzophenon; Benztriazolderivaten, wie z.B. 2-(2H-Benzotriazol-2-yl)-4,6-di-tert-pentylphenol, 2-(2H-Benzotriazol-2-yl)-6-dodecyl-4-methylphenol, 2-(2H-Benzotriazol-2-yl)-4,6-bis(1-methyl-1-phenylethyl)phenol, 2-(5-Chlor-2H-benzotriazol-2-yl)-6-(1,1-dimethylethyl)-4-methylphenol, 2-(2H-benzotriazol-2-yl)-4-(1,1,3,3-tetramethylbutyl)phenol, 2-(2H-Benzotriazol-2-yl)-6-(1-methyl-1-phenylethyl)-4-(1,1,3,3-tetramethylbutyl)phenol, Isooctyl-3-(3-(2H-benzotriazol-2-yl)-5-(1,1-dimethylethyl)-4-hydroxyphenylpropionat), 2-(2H-Benzotriazol-2-yl)-4,6-bis(1,1-dimethylethyl)phenol, 2-(2H-Benzotriazol-2-yl)-4,6-bis(1-methyl-1-phenylethyl)phenol, 2-(5-Chlor-2H-benzotriazol-2-yl)-4,6-bis(1,1-dimethylethyl)phenol; Oxalaniliden, wie z.B. 2-Ethyl-2'-ethoxy- oder 4-Methyl-4'-methoxyoxalanilid; Salicylsäureestern, wie z.B. Salicylsäurephenylester, Salicylsäure-4-tert-butylphenylester, Salicylsäure-4-tert-octylphenylester; Zimtsäureesterderivaten, wie z.B. α-Cyano-β-methyl-4-methoxyzimtsäuremethylester, α-Cyano-β-methyl-4-methoxyzimtsäurebutyl-ester, α-Cyano-β-phenylzimtsäureethylester, α-Cyano-β-phenylzimtsäureisooctylester; und Malonesterderivaten, wie z.B. 4-Methoxybenzylidenmalonsäuredimethylester, 4-Methoxybenzylidenmalonsäurediethylester, 4-Butoxybenzylidenmalonsäuredimethylester. Diese bevorzugten Lichtstabilisatoren können sowohl einzeln als auch in beliebigen Kombinationen untereinander zum Einsatz kommen.

Besonders bevorzugte UV-Stabilisatoren sind solche, die Strahlung einer Wellenlänge < 400 nm vollständig absorbieren. Hierzu zählen beispielsweise die genannten Benztriazolderivate. Ganz besonders bevorzugte UV-Stabilisatoren sind 2-(5-Chlor-2H-benzotriazol-2-yl)-6-(1,1-dimethylethyl)-4-methylphenol, 2-(2H-benzotriazol-2-yl)-4-(1,1,3,3-tetramethylbutyl)phenol und/oder 2-(5-Chlor-2H-benzotriazol-2-yl)-4,6-bis(1,1-dimethylethyl)phenol.

Gegebenenfalls werden ein oder mehrere der beispielhaft genannten UV-Stabilisatoren dem radikalisch vernetzbaren Harz vorzugsweise in Mengen von 0,001 bis 3,0 Gew.-%, besonders bevorzugt 0,005 bis 2 Gew.-%, berechnet als Gesamtmenge an eingesetzten UV-Stabilisatoren bezogen auf das Gesamtgewicht des radikalisch vernetzbaren Harzes, zugesetzt.

Geeignete Antioxidantien sind vorzugsweise sterisch gehinderten Phenole, welche vorzugsweise ausgewählt werden können aus der Gruppe, bestehend aus 2,6-Di-tert-butyl-4-methylphenol (Ionol), Pentaerythrit-tetrakis(3-(3,5-di-tert-butyl-4-hydroxy-phenyl)-propionat), Octadecyl-3-(3,5-di-tert-butyl-4-hydroxyphenyl)-propionat, Triethylen-glykol-bis(3-tert-butyl-4-hydroxy-5-methylphenyl)propionat, 2,2'-Thio-bis(4-methyl-6-tert-butylphenol) und 2,2'-Thiodiethyl-bis[3-(3,5-di-tert-butyl-4-hydroxyphenyl)propionat]. Diese können bei Bedarf sowohl einzeln als auch in beliebigen Kombinationen untereinander eingesetzt werden. Diese Antioxidantien werden vorzugsweise in Mengen von 0,01 bis 3,0 Gew.-%, besonders bevorzugt 0,02 bis 2,0 Gew.-%, berechnet als Gesamtmenge an eingesetzten Antioxidantien bezogen auf das Gesamtgewicht des radikalisch vernetzbaren Harze, eingesetzt.

Geeignete Radikalinhibitoren bzw. Verzögerer sind besonders solche, die eine unkontrollierte radikalische Polymerisation der Harzformulierung außerhalb des gewünschten (bestrahlten) Bereiches gezielt inhibieren. Diese sind für eine gute Randschärfe und Abbildungsgenauigkeit im Vorläufer entscheidend. Geeignete Radikalinhibitoren müssen entsprechend der gewünschten Radikalausbeute aus dem Bestrahlungs-/Belichtungsschritt und der Polymerisationsgeschwindigkeit und Reaktivität/Selektivität der Doppelbindungsträger ausgesucht werden. Geeignete Radikalinhibitoren sind z. B. 2,2-(2,5-thiophendiyl)bis(5-tertbutylbenzoxazol), Phenothiazin, Hydrochinone, Hydrochinonether, Quinonalkyde und Nitroxylverbindungen sowie Mischungen davon, Benzoquinone, Kupfer Salze, Brenzcatechine, Cresole, Nitrobenzol und Sauerstoff. Diese Antioxidantien werden vorzugsweise in Mengen von 0,001 Gew% bis 3 Gew.% eingesetzt.

Ausführungsformen und weitere Aspekte der vorliegenden Erfindung werden im Folgenden erläutert. Sie können beliebig miteinander kombiniert werden, sofern sich aus dem Kontext nicht eindeutig das Gegenteil ergibt.

In einer bevorzugten Ausführungsform liegen in der härtbaren Komponente weiterhin Isocyanurat-Gruppen vor, in der härtbaren Komponente liegt das molare Verhältnis von NCO-Gruppen zu Isocyanurat-Gruppen in einem Bereich von ≤ 100:1 bis ≥ 1:2 (bevorzugt ≤ 70:1 bis ≥ 1:1, mehr bevorzugt ≤ 50:1 bis ≥ 2:1) liegt und in der härtbaren Komponente liegt das molare Verhältnis von olefinischen C=C-Doppelbindungen zu Isocyanurat-Gruppen in einem Bereich von ≤ 100:1 bis ≥ 1:5 (bevorzugt ≤ 70:1 bis ≥ 1:3, mehr bevorzugt ≤ 50:1 bis ≥ 1:2). Die Isocyanuratgruppen sind vorzugsweise Teil eines Polyisocyanurats. Das molare Verhältnis von NCO-Gruppen oder C=C-Doppelbindungen zu Isocyanurat-Gruppen lässt sich aus der Integration der entsprechenden Signale im ¹³C-NMR-Spektrum der Probe bestimmen.

In einer weiteren bevorzugten Ausführungsform umfasst die härtbare Komponente eine härtbare Verbindung, welche Isocyanuratgruppen, NCO-Gruppen und olefinische C=C-Doppelbindungen aufweist, wobei
in der härtbaren Verbindung das molare Verhältnis von NCO-Gruppen und olefinischen C=C-Doppelbindungen in einem Bereich von ≥1:5 bis ≤ 5:1 (bevorzugt ≥ 1:4 bis ≤ 4:1, mehr bevorzugt ≥ 1:3 bis ≤ 3:1) liegt,
in der härtbaren Verbindung das molare Verhältnis von NCO-Gruppen zu Isocyanurat-Gruppen in einem Bereich von ≤ 100:1 bis ≥ 1:2 (bevorzugt ≤70:1 bis ≥ 1:1, mehr bevorzugt ≤50:1 bis ≥ 2:1) liegt und
in der härtbaren Verbindung das molare Verhältnis von olefinischen C=C-Doppelbindungen zu Isocyanurat-Gruppen in einem Bereich von ≤ 100:1 bis ≥ 1:5 (bevorzugt ≤ 70:1 bis ≥ 1:3, mehr bevorzugt ≤ 50:1 bis ≥ 1:2) liegt.

Diese Verbindung enthält somit die drei genannten Gruppen in einem Molekül. Mit eingeschlossen sind Polymere mit ihrer Molekulargewichtsverteilung, welche in jedem Molekül des Polymers diese Gruppen aufweisen.

Zur Erhöhung des NCO-Gruppengehalts in der härtbaren Komponente können weitere NCOfunktionelle Verbindungen wie Polyisocyanate und NCO-terminierte Prepolymere hinzugefügt werden. Auf diese Weise können die mechanischen Eigenschaften des erhaltenen Gegenstands weiter angepasst werden.

Zur Erhöhung des Doppelbindungsgehaltes in der härtbaren Komponente können zudem weitere doppelbindungsfunktionelle Verbindungen mit 1 bis 6 C=C-Doppelbindungen mit hinzugefügt werden. Auf diese Weise können die mechanischen Eigenschaften des erhaltenen Gegenstandes sowie die Viskosität des vernetzbaren Harzes weiter angepasst werden.

In einer weiteren bevorzugten Ausführungsform liegen in der härtbaren Verbindung die olefinischen Doppelbindungen zumindest teilweise in Form von (Meth)Acrylatgruppen vor.

In einer weiteren bevorzugten Ausführungsform ist die härtbare Verbindung aus der Reaktion eines NCO-terminierten Polyisocyanatprepolymers mit einem, bezogen auf die freien NCO-Gruppen, molaren Unterschuss eines Hydroxyalkyl(meth)acrylats erhältlich.

In einer weiteren bevorzugten Ausführungsform ist die härtbare Verbindung aus der Reaktion eines NCO-terminierten Polyisocyanurats mit einem, bezogen auf die freien NCO-Gruppen, molaren Unterschuss eines Hydroxyalkyl(meth)acrylats erhältlich.

Geeignete Polyisocyanate zur Herstellung der NCO-terminierten Polyisocyanurate sind beispielsweise solche, die ein Molekulargewicht im Bereich von 140 bis 400 g/mol aufweisen, mit aliphatisch, cycloaliphatisch, araliphatisch und/oder aromatisch gebundenen Isocyanatgruppen, wie z. B. 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H₁₂MDI), 1,3- und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'tetra-methyl-1,1'-bi(cyclohexyl), 1,8-Diisocyanato-p-menthan, 1,3-Diisocyanato-adamantan, 1,3-Dimethyl-5,7-diisocyanatoadamantan, 1,3- und 1,4-Bis-(isocyanatomethyl)benzol (Xyxlylendiisocyanat; XDI), 1,3- und 1,4-Bis(1-isocyanato-1-methylethyl)-benzol (TMXDI) und Bis(4-(1-isocyanato-1-methylethyl)phenyl)-carbonat, 2,4- und 2,6-Diisocyanatotoluol (TDI), 2,4'- und 4,4'-Diisocyanatodiphenylmethan (MDI), 1,5-Diisocyanatonaphthalin sowie beliebige Gemische solcher Diisocyanate.

Ferner können erfindungsgemäß auch aliphatische und/oder aromatische Isocyanat-Endgruppen tragende Prepolymere, wie beispielsweise aliphatische oder aromatische Isocyanat-Endgruppentragende Polyether-, Polyester-, Polyacrylat, Polyepoxyd oder Polycarbonat-Prepolymere als Edukte der Isocyanurat-Bildung eingesetzt werden. Geeignete Trimerisierungskatalysatoren werden weiter unten im Zusammenhang mit einer anderen Ausführungsform beschrieben.

Geeignete Hydroxyalkyl(meth)acrylate sind unter anderem Alkoxyalkyl(meth)acrylate mit 2 bis 12 Kohlenstoffatomen im Hydroxyalkylrest. Bevorzugt sind 2-Hydroxyethylacrylat, das bei der Anlagerung von Propylenoxid an Acrylsäure entstehende Isomerengemisch oder 4-Hydroxybutylacrylat.

Die Reaktion zwischen dem Hydroxyalkyl(meth)acrylat und dem NCO-terminierten Polyisocyanurat kann durch die üblichen Urethanisierungskatalysatoren wie DBTL katalysiert werden. Bei dieser Reaktion kann das molare Verhältnis zwischen NCO-Gruppen und OH-Gruppen des Hydroxyalkyl(meth)acrylats in einem Bereich von ≥10:1 bis ≤ 1,1:1 (bevorzugt ≥ 5:1 bis ≤ 1,5:1, mehr bevorzugt ≥ 4:1 bis ≤ 2:1) liegen. Die erhaltene härtbare Verbindung kann ein zahlenmittleres Molekulargewicht Mₙ von ≥ 200 g/mol bis ≤ 5000 g/mol aufweisen. Vorzugsweise beträgt dieses Molekulargewicht ≥ 300 g/mol bis ≤ 4000 g/mol, mehr bevorzugt ≥ 400 g/mol bis ≤ 3000 g/mol.

Besonders bevorzugt ist eine härtbare Verbindung, die aus der Reaktion eines NCO-terminierten Polyisocyanurats mit Hydroxethyl(meth)acrylat erhalten wurde, wobei das NCO-terminierte Polyisocyanurat aus 1,6-Hexamethylendiisocyanat in Gegenwart eines Isocyanat-Trimerisierungskatalysators erhalten wurde. Diese härtbare Verbindung hat ein zahlenmittleres Molekulargewicht Mₙ von ≥ 400 g/mol bis ≤ 3000 g/mol und ein molares Verhältnis von NCO-Gruppen und olefinischen C=C-Doppelbindungen in einem Bereich von ≥ 1:5 bis ≤ 5:1. besonders bevorzugt ≥1:3 bis ≤ 3:1, ganz besonders bevorzugt. ≥1:2 bis ≤ 2:1.

In einer weiteren bevorzugten Ausführungsform umfasst das radikalisch vernetzbare Harz weiterhin einen Radikalstarter und/oder einen Isocyanat-Trimerisierungskatalysator. Um eine unerwünschte Erhöhung der Viskosität des radikalisch vernetzbaren Harzes zu verhindern, können Radikalstarter und/oder Isocyanat-Trimerisierungskatalysator erst unmittelbar vor Beginn des erfindungsgemäßen Verfahrens dem Harz hinzugefügt werden.

Als Radikalstarter kommen thermische und/oder photochemische Radikalstarter (Photoinitiatoren) in Betracht. Es ist auch möglich, dass gleichzeitig thermische und photochemische Radikalstarter eingesetzt werden. Geeignete thermische Radikalstarter sind beispielsweise Azobisisobutyronitril (AIBN), Dibenzoylperoxid (DBPO), Di-tert-butylperoxid und/oder anorganische Peroxide wie Peroxodisulfate.

Bei den Photoinitiatoren wird prinzipiell zwischen zwei Typen unterschieden, dem unimolekularen Typ (I) und dem bimolekularen Typ (II). Geeignete Typ (I)-Systeme sind aromatische Ketonverbindungen, wie z. B. Benzophenone in Kombination mit tertiären Aminen, Alkylbenzophenone, 4,4'-Bis(dimethylamino)benzophenon (Michlers Keton), Anthron und halogenierte Benzophenone oder Mischungen der genannten Typen. Weiter geeignet sind Typ (II)-Initiatoren wie Benzoin und seine Derivate, Benzilketale, Acylphosphinoxide, 2,4,6-Trimethylbenzoyldiphenylphosphinoxid, Bisacylphosphinoxide, Phenylglyoxylsäureester, Campherchinon, α-Aminoalkylphenone, α,α-Dialkoxyacetophenone und α-Hydroxyalkylphenone. Spezielle Beispiele sind Irgacur®500 (eine Mischung von Benzophenon und (1-Hydroxycyclohexyl)phenylketon, Fa. Ciba, Lampertheim, DE), Irgacure®819 DW (Phenylbis-(2, 4, 6-trimethylbenzoyl)phosphinoxid, Fa. Ciba, Lampertheim, DE) oder Esacure® KIP EM (Oligo-[2-hydroxy-2-methyl-1-[4-(1-methylvinyl)-phenyl]-propanone], Fa. Lamberti, Aldizzate, Italien) und Bis-(4-methoxybenzoyl)diethylgerman. Es können auch Gemische dieser Verbindungen eingesetzt werden.

Bei den Photoinitiatoren sollte darauf geachtet werden, dass sie eine ausreichende Reaktivität gegenüber der verwendeten Strahlenquelle haben. Es sind eine Vielzahl von Photoinitiatoren auf dem Markt bekannt. Durch kommerziell verfügbare Photoinitiatoren wird der Wellenlängenbereich im gesamten UV-VIS Spektrum abgedeckt. Photoinitiatoren finden Einsatz bei der Herstellung von Lacken, Druckfarben und Klebstoffen sowie im Dentalbereich.

Im erfindungsgemäßen Verfahren kommt der Photoinitiator im Allgemeinen in einer auf die Menge der eingesetzten härtbaren olefinisch ungesättigte Doppelbindungen tragenden Komponente bezogenen Konzentration von 0,01 bis 6,0 Gew.-%, bevorzugt von 0,05 bis 4,0 Gew.-% und besonders bevorzugt von 0,1 bis 3,0 Gew.-% zum Einsatz.

Geeignete Isocyanat-Trimerisierungskatalysatoren sind prinzipiell alle Verbindungen, die die Addition von Isocyanatgruppen zu Isocyanuratgruppen beschleunigen und dadurch die vorliegenden isocyanatgruppenhaltigen Moleküle vernetzen.

Geeignete Isocyanat-Trimerisierungskatalysatoren sind beispielsweise einfache tertiäre Amine, wie z. B. Triethylamin, Tributylamin, N,N-Dimethylanilin, N-Ethylpiperidin oder N, N'-Dimethylpiperazin. Geeignete Katalysatoren sind auch die in der GB 2 221 465 beschriebenen tertiären Hydroxyalkylamine, wie z. B. Triethanolamin, N-Methyl-diethanolamin, Dimethylethanolamin, N-Isopropyldiethanolamin und 1-(2-Hydroxyethyl)pyrrolidin, oder die aus der GB 2 222 161 bekannten, aus Gemischen tertiärer bicyclischer Amine, wie z. B. DBU, mit einfachen niedermolekularen aliphatischen Alkoholen bestehenden Katalysatorsysteme.

Als Isocyanat-Trimerisierungskatalysatoren ebenfalls geeignet ist eine Vielzahl unterschiedlicher Metallverbindungen. Geeignet sind beispielsweise die in der DE-A 3 240 613 als Katalysatoren beschriebenen Oktoate und Naphthenate von Mangan, Eisen, Cobalt, Nickel, Kupfer, Zink, Zirkonium, Cer oder Blei oder deren Gemische mit Acetaten von Lithium, Natrium, Kalium, Calcium oder Barium, die aus DE-A 3 219 608 bekannten Natrium- und Kalium-Salze von linearen oder verzweigten Alkancarbonsäuren mit bis zu 10 C-Atomen, wie z. B. von Propionsäure, Buttersäure, Valeriansäure, Capronsäure, Heptansäure, Caprylsäure, Pelargonsäure, Caprinsäure und Undecylsäure, die aus der EP-A 0 100 129 bekannten Alkali- oder Erdalkalimetallsalze von aliphatischen, cycloaliphatischen oder aromatischen Mono- und Polycarbonsäuren mit 2 bis 20 C-Atomen, wie z. B. Natrium- oder Kaliumbenzoat, die aus der GB-PS 1 391 066 und GB-PS 1 386 399 bekannten Alkaliphenolate, wie z. B. Natrium- oder Kaliumphenolat, die aus der GB 809 809 bekannten Alkali- und Erdalkalioxide, -hydroxide, -carbonate, -alkoholate und -phenolate, Alkalimetallsalze von enolisierbaren Verbindungen sowie Metallsalze schwacher aliphatischer bzw. cycloaliphatischer Carbonsäuren, wie z. B. Natriummethoxid, Natriumacetat, Kaliumacetat, Natriumacetoessigester, Blei-2-ethylhexanoat und Bleinaphthenat, die aus der EP-A 0 056 158 und EP-A 0 056 159 bekannten, mit Kronenethern oder Polyetheralkoholen komplexierten basischen Alkalimetallverbindungen, wie z. B. komplexierte Natrium- oder Kaliumcarboxylate, das aus der EP-A 0 033 581 bekannte Pyrrolidinon-Kaliumsalz, die aus der Anmeldung EP 13196508.9 bekannten ein- oder mehrkernigen Komplexverbindung von Titan, Zirkonium und/oder Hafnium, wie z. B. Zirkoniumtetra-n-butylat, Zirkoniumtetra-2-ethylhexanoat und Zirkoniumtetra-2-ethylhexylat, sowie Zinnverbindungen der in European Polymer Journal, Vol. 16, 147 - 148 (1979) beschriebenen Art, wie z. B. Dibutylzinndichlorid, Diphenylzinndichlorid, Triphenylstannanol, Tributylzinnacetat, Tributylzinnoxid, Zinnoctoat, Dibutyl(dimethoxy)stannan und Tributylzinnimidazolat.

Die Isocyanat-Trimerisierungskatalysatoren können sowohl einzeln als auch in Form beliebiger Gemische untereinander im erfindungsgemäßen Verfahren eingesetzt werden.

Als Isocyanat-Trimerisierungskatalysatoren hervorgehoben seien Natrium- und Kaliumsalze aliphatischer Carbonsäuren mit 2 bis 20 C-Atomen in Kombination mit Komplexbildnern wie Kronenethern oder Polyethylen- oder Polypropylenglykolen sowie aliphatisch substituierte Zinnverbindungen oder Phosphine.

Im erfindungsgemäßen Verfahren kommt der Isocyanat-Trimerisierungskatalysator im Allgemeinen in einer auf die Menge der eingesetzten härtbaren Komponente bezogenen Konzentration von 0,0005 bis 5,0 Gew.-%, bevorzugt von 0,0010 bis 2,0 Gew.-% und besonders bevorzugt von 0,0015 bis 1,0 Gew.-% zum Einsatz.

Die beim erfindungsgemäßen Verfahren zum Einsatz gelangenden Isocyanat-Trimerisierungskatalysatoren sind in den Mengen, die zur Initiierung der Trimerisierungsreaktion benötigt werden, in der Regel ausreichend in dem radikalisch vernetzbaren Harz löslich. Die Zugabe des Isocyanat-Trimerisierungskatalysators erfolgt daher vorzugsweise in Substanz.

In einer weiteren bevorzugten Ausführungsform ist der Radikalstarter ausgewählt aus der Gruppe: α-Hydroxyphenylketon, Benzyldimethylketal und/oder 2,4,6-Trimethylbenzoyldiphenylphosphinoxid, Bis-(4-methoxybenzoyl)diethylgerman (Ivocerin®).
und/oder
der Isocyanurat-Trimerisierungskatalysator ist ausgewählt ist aus: Kaliumacetat, Kaliumacetat in Kombination mit einem Kronenether, Kaliumacetat in Kombination mit einem Polyethylenglykol, Kaliumacetat in Kombination mit einem Polypropylenglykol, Zinnoctoat, Natriumphenolat, Kaliumhydroxid, Trioctylphosphin und/oder Tributylzinnoxid.

In einer weiteren bevorzugten Ausführungsform beträgt in dem Harz das molare Verhältnis von NCO-Gruppen zu Zerewitinoff-aktiven H-Atomen ≥ 500 (bevorzugt ≥ 1000, mehr bevorzugt ≥ 2000). Das molare Verhältnis von NCO-Gruppen und Zerewitinoff-aktiven H-Atomen wird auch als NCO-Index oder Kennzahl bezeichnet. Als Träger von Zerewitinoff-aktiven H-Atomen kommen insbesondere Verbindungen mit O-H, N-H oder S-H-Bindungen in Frage. Ein möglichst geringer Anteil an Verbindungen mit Zerewitinoff-aktiven H-Atomen führt dazu, dass mehr NCO-Gruppen nach Schritt III) für die Isocyanurat-Bildung zur Verfügung stehen.

Alternativ oder zusätzlich kann dieser Umstand dadurch ausgedrückt werden, dass das Harz Verbindungen mit Zerewitinoff-aktiven H-Atomen in einer Menge von ≤ 20 Gewichts-% (bevorzugt ≤ 10 Gewichts-%, mehr bevorzugt ≤ 5 Gewichts-%), bezogen auf die Masse des Harzes, enthält.

In einer weiteren bevorzugten Ausführungsform weist die härtbare Komponente ein zahlenmittleres Molekulargewicht Mₙ von ≥ 200 g/mol bis ≤ 5000 g/mol auf. Vorzugsweise beträgt dieses Molekulargewicht ≥ 300 g/mol bis ≤ 4000 g/mol, mehr bevorzugt ≥ 400 g/mol bis ≤ 3000 g/mol.

In einer weiteren bevorzugten Ausführungsform umfasst in Schritt IV) das Behandeln des nach Schritt III) erhaltenen Vorläufers bei Bedingungen, die ausreichen, um im radikalisch vernetzten Harz des erhaltenen Vorläufers vorliegende NCO-Gruppen zumindest teilweise zu Isocyanurat-Gruppen zu trimerisieren, ein Erwärmen des Körpers auf eine Temperatur von ≥ 60°C. Vorzugsweise beträgt diese Temperatur ≥ 80 °C bis ≤ 250 °C, mehr bevorzugt ≥ 90 °C bis ≤ 190 °C. Die gewählte Temperatur oder der gewählte Temperaturbereich in Schritt IV) kann beispielsweise für ≥ 5 Minuten bis ≤ 48 Stunden, bevorzugt ≥ 15 Minuten bis ≤ 24 Stunden und mehr bevorzugt ≥ 1 Stunde bis ≤ 12 Stunden gehalten werden.

In einer weiteren bevorzugten Ausführungsform wird die Oberfläche des nach Schritt III) erhaltenen Vorläufers und/oder des nach Schritt IV) erhaltenen Gegenstands mit einer Zerewitinoff-aktive H-Atome aufweisenden Verbindung kontaktiert, wobei als natürliche Luftfeuchtigkeit in der den Vorläufer und/oder den Gegenstand umgebenden Atmosphäre vorkommendes Wasser ausgenommen ist. Bei einer Reaktion von noch freien NCO-Gruppen mit diesen Verbindungen kann eine Funktionalisierung der Oberflächen erreicht werden. Die Zerewitinoff-aktive H-Atome aufweisende Verbindung kann beispielsweise durch Eintauchen, Aufsprühen oder Bestreichen mit der Oberfläche des Vorläufers in Kontakt gebracht werden. Eine weitere Möglichkeit ist die Kontaktierung über die Gasphase, beispielsweise mittels Ammoniak oder Wasserdampf. Optional kann ein Katalysator die Reaktion beschleunigen.

Beispiele für als Funktionalisierungsreagenz geeignete Verbindungen sind Alkohole, Amine, Säuren und ihre Derivate, Epoxide und insbesondere Polyole, wie zum Beispiel Zucker, Polyacrylatpolyole, Polyesterpolyole, Polyetherpolyole, Polyvinylalkohole, Polycarbonatpolyole, Polyethercarbonatpolyole und Polyestercarbonatpolyole, langkettige aliphatische Alkohole, fluorierte oder chlorierte Alkohole. Weitere Beispiele sind Polyacrylsäure, Polyamide, Polysiloxane, Polyacrylamide, Polyvinylpyrrolidone, Polyvinylbutyrat, Polyketone, Polyetherketone, Polyacetale und Polyamine. Auch zur gezielten Ausbildung von Harnstoffen können Amine eingesetzt werden.

Vorzugsweise wird ein langkettiger Alkylalkohol, ein langkettiges (sekundäres) Alkylamin, eine Fettsäure, ein epoxidierter Fettsäureester, ein (per)fluorierter langkettiger Alkohol oder deren Mischungen eingesetzt. "Langkettig" ist hier als ab 6 C-Atomen, vorzugsweise ab 8 C-Atomen, mehr bevorzugt ab 10 C-Atomen in der längsten Kette der Verbindung zu verstehen. Die Herstellung von modifizierten Polyisocyanaten ist prinzipiell bekannt und beispielsweise in EP-A 0 206 059 und EP-A 0 540 985 beschrieben. Sie erfolgt vorzugsweise bei Temperaturen von 40 bis 180 °C.

In einer weiteren bevorzugten Ausführungsform weist das Verfahren die zusätzlichen Merkmale auf:
- der Träger ist innerhalb eines Behälters angeordnet und vertikal in Schwerkraftrichtung absenkbar,
- der Behälter enthält das radikalisch vernetzbare Harz in einer Menge, welche ausreicht, um wenigstens den Träger und auf dem Träger abgeschiedenes vernetztes Harz zu bedecken,
- vor jedem Schritt II) wird der Träger um eine vorbestimmte Strecke abgesenkt, so dass über der in vertikaler Richtung gesehen obersten Lage des Aufbaumaterials sich eine Schicht des radikalisch vernetzbaren Harzes bildet und
- in Schritt II) belichtet und/oder bestrahlt ein Energiestrahl den ausgewählten Bereich der Schicht des radikalisch vernetzbaren Harzes, entsprechend dem jeweils ausgewählten Querschnitt des Vorläufers.

Somit wird gemäß dieser Ausführungsform das additive Fertigungsverfahren der Stereolithographie (SLA) abgedeckt. Der Träger kann beispielsweise jeweils um eine vorbestimmte Strecke von ≥ 1 µm bis ≤ 2000 µm abgesenkt werden.

In einer weiteren bevorzugten Ausführungsform weist das Verfahren die zusätzlichen Merkmale auf:
- der Träger ist innerhalb eines Behälters angeordnet und vertikal entgegen der Schwerkraftrichtung anhebbar,
- der Behälter stellt das radikalisch vernetzbare Harz bereit,
- vor jedem Schritt II) wird der Träger um eine vorbestimmte Strecke angehoben, so dass unter der in vertikaler Richtung gesehen untersten Lage des Aufbaumaterials sich eine Schicht des radikalisch vernetzbaren Harzes bildet und
- in Schritt II) belichtet und/oder bestrahlt eine Mehrzahl von Energiestrahlen den ausgewählten Bereich der Schicht des radikalisch vernetzbaren Harzes, entsprechend dem jeweils ausgewählten Querschnitt des Vorläufers, gleichzeitig.

Somit wird gemäß dieser Ausführungsform das additive Fertigungsverfahren der DLP-Technologie abgedeckt, wenn die Mehrzahl von Energiestrahlen über ein Array von einzeln ansteuerbaren Mikrospiegeln das per Belichtung und/oder Bestrahlung bereitzustellende Bild erzeugen. Der Träger kann beispielsweise jeweils um eine vorbestimmte Strecke von ≥ 1 µm bis ≤ 2000 µm angehoben werden.

In einer weiteren bevorzugten Ausführungsform weist das Verfahren die zusätzlichen Merkmale auf:
- in Schritt II) wird das radikalisch vernetzbare Harz aus einem Druckkopf, entsprechend dem jeweils ausgewählten Querschnitt des Vorläufers, aufgetragen wird und anschließend belichtet und/oder bestrahlt.

Somit wird gemäß dieser Ausführungsform das additive Fertigungsverfahren der Inkjet-Methode abgedeckt: es wird das vernetzbare Harz gegebenenfalls separat von den erfindungsgemäßen Katalysatoren selektiv durch einen oder mehrere Druckköpfe aufgetragen und die anschließende Härtung durch Bestrahlen und/oder Belichtung kann unselektiv sein, beispielsweise durch eine UV-Lampe. Bei dem oder den Druckköpfen zum Auftragen des Harzes kann es sich um einen (modifizierten) Druckkopf für Tintenstrahldruckverfahren handeln. Der Träger kann vom Druckkopf weg bewegbar ausgestaltet sein oder der Druckkopf kann vom Träger weg bewegbar ausgestaltet sein. Die Inkremente der Abstandsbewegungen zwischen Träger und Druckkopf können beispielsweise in einem Bereich von ≥ 1 µm bis ≤ 2000 µm liegen.

Insbesondere bei dieser Ausführungsform kann durch eine geringe Anzahl von Wiederholungen des Schritts II) ein sehr dünner Vorläufer aufgebaut werden. Dieser Vorläufer kann auch auf einem Substrat als Träger aufgebaut werden, welches eine Funktion in der späteren Verwendung des hergestellten Gegenstandes einnimmt. Dann ist es gerechtfertigt, von dem Auftragen einer Oberfläche auf den Träger oder das Substrat zu sprechen. Das Substrat kann beispielsweise ein Innen- oder Außenteil eines Fahrzeugs sein. Das erfindungsgemäße Verfahren gemäß dieser Ausführungsform lässt sich dann auch als Lackierverfahren ansehen.

Die Erfindung betrifft ebenfalls die Verwendung eines radikalisch vernetzbaren Harzes, welches eine Viskosität, gemessen bei 23 °C gemäß DIN EN ISO 2884-1, von ≥ 5 mPas bis ≤ 100000 mPas aufweist, in einem additiven Fertigungsverfahren, wobei das Harz eine härtbare Verbindung umfasst, welche Isocyanuratgruppen, NCO-Gruppen und olefinische C=C-Doppelbindungen aufweist,
wobei das molare Verhältnis von NCO-Gruppen und olefinischen C=C-Doppelbindungen in einem Bereich von ≥15 bis ≤ 5:1 (bevorzugt ≥ 1:4 bis ≤ 4:1, mehr bevorzugt ≥ 1:3 bis ≤ 3:1) liegt,
das molare Verhältnis von NCO-Gruppen zu Isocyanurat-Gruppen in einem Bereich von ≤ 100:1 bis ≥ 1:2 (bevorzugt ≤ 70:1 bis ≥ 1:1, mehr bevorzugt ≤ 50:1 bis ≥ 2:1) liegt und
das molare Verhältnis von olefinischen C=C-Doppelbindungen zu Isocyanurat-Gruppen in einem Bereich von ≤ 100:1 bis ≥ 1:5 (bevorzugt ≤ 70:1 bis ≥ 1:3, mehr bevorzugt ≤ 50:1 bis ≥ 1:2) bis ≤ 1:20) liegt.

In einer bevorzugten Ausführungsform der Verwendung umfasst das Harz weiterhin einen Radikalstarter und/oder einen Isocyanat-Trimerisierungskatalysator. Vorzugsweise ist der Radikalstarter ausgewählt aus der Gruppe: α-Hydroxyphenylketon, Benzyldimethylketal und/oder 2,4,6-Trimethylbenzoyldiphenylphosphinoxid, Bis-(4-methoxybenzoyl)diethylgerman,
und/oder
der Isocyanurat-Trimerisierungskatalysator ist ausgewählt ist aus: Kaliumacetat, Kaliumacetat in Kombination mit einem Kronenether, Kaliumacetat in Kombination mit einem Polyethylenglykol, Kaliumacetat in Kombination mit einem Polypropylenglykol, Zinnoctoat, Natriumphenolat, Kaliumhydroxid, Trioctylphosphin und/oder Tributylzinnoxid.

Hinsichtlich der härtbaren Verbindung gelten bei der erfindungsgemäßen Verwendung die gleichen Überlegungen und bevorzugten Ausführungsformen wie zuvor in Hinblick auf das erfindungsgemäße Verfahren. Zur Vermeidung unnötiger Wiederholungen werden sie nicht erneut wiedergegeben. Es sei lediglich angemerkt, dass in einer weiteren bevorzugten Ausführungsform in der härtbaren Verbindung die olefinischen Doppelbindungen zumindest teilweise in Form von (Meth)Acrylatgruppen vorliegen und dass in einer weiteren bevorzugten Ausführungsform die härtbare Verbindung aus der Reaktion eines NCO-terminierten Polyisocyanurats mit einem, bezogen auf die freien NCO-Gruppen, molaren Unterschuss eines Hydroxyalkyl(meth)acrylats erhältlich ist.

In einer weiteren bevorzugten Ausführungsform der Verwendung umfasst das additive Fertigungsverfahren das Belichten und/oder Bestrahlen eines zuvor ausgewählten Bereichs des radikalisch vernetzbaren Harzes. Das additive Fertigungsverfahren kann beispielsweise ein Stereolithographie- oder ein DLP (digital light processing)-Verfahren sein. Unter "Belichten" wird hierbei die Einwirkung von Licht im Bereich zwischen nahem IR- und nahem UV-Licht (1400 nm bis 315 nm Wellenlänge) verstanden. Die übrigen kürzeren Wellenlängenbereiche werden durch den Begriff "Bestrahlen" abgedeckt, zum Beispiel fernes UV-Licht, Röntgenstrahlung, Gammastrahlung und auch Elektronenstrahlung.

Ein weiterer Gegenstand der Erfindung ist ein Polymer, erhältlich durch die Vernetzung eines Harzes, welches eine Viskosität, gemessen bei 23 °C gemäß DIN EN ISO 2884-1, von ≥ 5 mPas bis ≤ 100000 mPas aufweist, wobei das Harz eine härtbare Komponente umfasst, welche NCO-Gruppen und olefinische C=C-Doppelbindungen aufweist, wobei das molare Verhältnis von NCO-Gruppen und olefinischen C=C-Doppelbindungen in einem Bereich von ≥1:5 bis ≤ 5:1 (bevorzugt ≥ 1:4 bis ≤ 4:1, mehr bevorzugt ≥ 1:3 bis ≤ 3:1) liegt.

Die härtbare Komponente umfasst eine härtbare Verbindung, welche NCO-Gruppen und olefinische C=C-Doppelbindungen aufweist, wobei in der härtbaren Verbindung das molare Verhältnis von NCO-Gruppen und olefinischen C=C-Doppelbindungen in einem Bereich von C-Doppelb≤ 5:1 liegt und die Vernetzung erfolgt durch ein zweistufiges Verfahren aus radikalischer Vernetzung der C=C-Doppelbindungen, gefolgt von Trimerisierung der NCO-Gruppen zu Isocyanuratgruppen.

Vorzugsweise handelt es sich bei dem Polymer um ein Polymer, erhältlich durch die Vernetzung eines Harzes, welches eine Viskosität, gemessen bei 23 °C gemäß DIN EN ISO 2884-1, von ≥ 5 mPas bis ≤ 100000 mPas aufweist, wobei das Harz eine härtbare Komponente umfasst, welche Isocyanurat, NCO-Gruppen und olefinische C=C-Doppelbindungen aufweist,
wobei das molare Verhältnis von NCO-Gruppen und olefinischen C=C-Doppelbindungen in einem Bereich von ≥15 bis ≤ 5:1 (bevorzugt ≥ 1:4 bis ≤ 4:1, mehr bevorzugt ≥ 1:3 bis ≤ 3:1) liegt,
das molare Verhältnis von NCO-Gruppen zu Isocyanurat-Gruppen in einem Bereich von ≤ 100:1 bis ≥ 1:2 (bevorzugt ≤ 70:1 bis ≥ 1:1, mehr bevorzugt ≤ 50:1 bis ≥ 2:1) liegt und
das molare Verhältnis von olefinischen C=C-Doppelbindungen zu Isocyanurat-Gruppen in einem Bereich von ≤ 100:1 bis ≥ 1:5 (bevorzugt ≤ 70:1 bis ≥ 1:3, mehr bevorzugt ≤ 50:1 bis ≥ 1:2) bis ≤ 1:20) liegt.

Die Vernetzung kann insbesondere durch ein zweistufiges Verfahren aus radikalischer Vernetzung der C=C-Doppelbindungen, gefolgt von Trimerisierung (einschließlich der Trimerisierungs-Nebenreaktionen) der NCO-Gruppen zu Isocyanuratgruppen, erfolgen.

Hinsichtlich der härtbaren Verbindung gelten bei der erfindungsgemäßen Verwendung die gleichen Überlegungen und bevorzugten Ausführungsformen wie zuvor in Hinblick auf das erfindungsgemäße Verfahren. Zur Vermeidung unnötiger Wiederholungen werden sie nicht erneut wiedergegeben. Es sei lediglich angemerkt, dass in einer bevorzugten Ausführungsform in der härtbaren Verbindung die olefinischen Doppelbindungen zumindest teilweise in Form von (Meth)Acrylatgruppen vorliegen und dass in einer weiteren bevorzugten Ausführungsform die härtbare Verbindung aus der Reaktion eines NCO-terminierten Polyisocyanurats mit einem, bezogen auf die freien NCO-Gruppen, molaren Unterschuss eines Hydroxyalkyl(meth)acrylats erhältlich ist.

### Beispiele

Die Erfindung wird anhand der nachfolgenden Beispiele näher erläutert, ohne jedoch darauf beschränkt zu sein.

Es wurden die in der Tabelle 1 und 2 angegebenen Formulierungen radikalisch vernetzbarer Harze hergestellt. Die Angaben in den Tabellen beziehen sich auf Gewichtsteile, sofern nicht anders angegeben. Die mit V gekennzeichneten Versuche dienen als Vergleichsversuche.

**Tabelle 1**

| | | |
|---|---|---|
| Formulierung | 1 | 2 |
| Isocyanat 1 | 56 | 70 |
| Isocyanat 2 | 14 | - |
| Acrylat 1 | 30 | 30 |
| Photoinitiator 1 | 0,8 Gew.-% des Acrylats | 0,8 Gew.-% des Acrylats |
| Inhibitor | 0,08% Gew.-% des Acrylats | 0,08% Gew.-% des Acrylats |
| KOAc-Katalysator | 1,5 Gew.-% % der Isocyanate 1 und 2 | 1,5 Gew.-% % des Isocyanats 1 |

**Tabelle 2**

| | | | | | | | | | | |
|---|---|---|---|---|---|---|---|---|---|---|
| Formulierung | 3 | 4 | 5 | 6 | 7 | 8 | 9 | V2 | V3 | 10 |
| Einsatzstoffe | g | g | g | g | g | g | g | g | g | g |
| Isocyanat 1 | 30 | 15 | 21 | 10,5 | 15 | 21 | 15 | | | 11 |
| Isocyanat 3 | | 15 | | 10,5 | | | | 21 | | |
| Isocyanat 4 | | | | | 6 | | | | | |
| Isocyanat 5 | | | | | | | | | | 10 |
| Acrylat 1 | | | 9 | 9 | 9 | | 6 | 9 | 21 | 9 |
| Acrylat 2 | | | | | | 9 | 9 | | 9 | |
| Photoinitiator 2 | 0,8 | 0,8 | 0,8 | 0,8 | 0,8 | 0,8 | 0,8 | 0,8 | 0,8 | 0,8 |
| Katalysator | 0,9 | 0,9 | 0,9 | 0,9 | 0,9 | 0,9 | 0,9 | 0,9 | 0,9 | 0,9 |

Isocyanat 1: Reaktionsprodukts des 1,6-HDI-Trimers mit Hydroxyethylacrylat und der folgenden idealisierten Struktur: 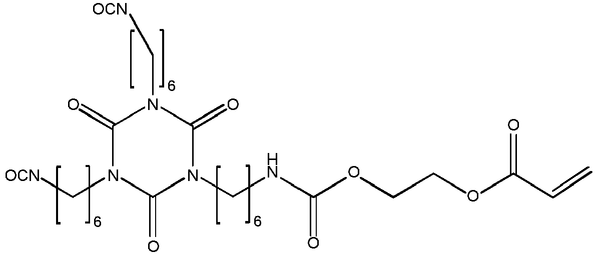
Isocyanat 2: NCO-terminiertes, Polyether-modifiziertes HDI-Prepolymer (Desmodur® N3100 Covestro Deutschland AG)
Isocyanat 3: Aliphatisches Polyisocyanat niedrigviskoses HDI-Trimerisat (Desmodur® N3600 Covestro Deutschland AG)
Isocyanat 4: Isophorondiisocyanat (Desmodur® I Covestro Deutschland AG)
Isocyanat 5: Aliphatisches, weitgehend lineares isocyanatfunktionelles Prepolymer eines Polyethers auf Basis von Hexamethylendiisocyanat (Desmodur® XP 2617 Covestro Deutschland AG)
Acrylat 1: 1,6-Hexandioldiacrylat (Analysenqualität bezogen von Sigma-Aldrich)
Acrylat 2: Isobornylacrylat (Analysenqualität bezogen von Sigma-Aldrich)
Photoinitiator 1: Diphenyl(2,4,6-trimethylbenzoyl)phosphinoxid; TPO (bezogen von Sigma-Aldrich)
Photoinitiator 2: 2-Hydroxy-2-methylpropiophenone; Darocur 1173 (bezogen von Sigma-Aldrich)
Inhibitor: BBOT: 2,2'-(2,5-thiophenediyl)bis(5-(1,1-dimethylethyl)-benzoxazol; UV-Blocker (bezogen von Sigma-Aldrich)
Katalysator: Kaliumacetat + Kronenether 18-Krone-6 in Diethylenglykol (Komponenten bezogen von Sigma-Aldrich und abgemischt in Verhältnis: 0,148 g Kaliumacetat + 0,485 g 18-Krone-6 Ether + 3,115 g Diethylenglykol.

Für ein Vergleichsbeispiel V1 wurde die Harzformulierung *Autodesk Standard Clear Prototyping Resin PR48* ausgewählt. Diese Harzformulierung enthält zu ca. 40 Gewichts-% das aliphatische Urethanacrylat Ebecryl® 8210, zu ca. 40 Gewichts-% das ethoxylierte Pentaerythritoltetraacrylat Sartomer® SR 494, als Photoinitiator TPO, zu ca. 20 Gewichts-% als Reaktivverdünner das monofunktionelle Urethanacrylat Rahn Genomer® 1122 und als UV-Blocker Mayzo® OB+ (2,2'-(2,5-thiophendiyl)bis(5-tert-butylbenzoxazol)).

Alle aufgeführten erfindungsgemäßen Formulierungen und Vergleichsformulierungen wurden, sowie nicht anders beschrieben, durch Zugabe aller Bestandteile in der Reihenfolge der Rezeptur in einem Thinky ARE 250 Speedmixer für 2 Minuten bei 2000 U/m gemischt.

Mit den erfindungsgemäßen Formulierungen 1 und 2 sowie der Formulierung des Vergleichsbeispiels V1 wurden auf einer DLP-basierten 3D-Druckanlage von Typ *Ember* des Herstellers Autodesk Standard-S3-Probenstäbe für Zugversuche hergestellt. Die Wellenlänge für die Belichtung betrug 405 nm. Die einzelnen Schichten der Probenstäbe waren parallel zur Zugrichtung angeordnet. Die Schichtdicke betrug jeweils 50 µm. Die Belichtungszeit betrug 5 s / Schicht.

Anschließend wurden die aus den Formulierungen 1 und 2 hergestellten Vorläufer für 30 Minuten bei 130 °C in einem Umlufttrockenschrank erhitzt.

Die so erhaltenen Probenstäbe hatten die in der nachfolgenden Tabelle 3 wiedergegebenen Eigenschaften.

**Tabelle 3**

| | V1 | 1 | 2 |
|---|---|---|---|
| Elastizitätsmodul [GPa], DIN 53504 | 1 | 1,3 | 1,2 |
| Zugfestigkeit [MPa], DIN 53504 | 34 | 48 | 48 |
| Bruchdehnung [%], DIN 53504 | 5,4 | 4,4 | 5,1 |

Die Erfindungsgemäßen Beispiele 1 und 2 zeigen im Vergleich zu dem Vergleichsbeispiel V1 eine deutlich höhere Zugfestigkeit bei vergleichbarer Bruchdehnung.

Die erfindungsgemäßen Formulierungen 3 bis10 und die Vergleichsformulierungen V2 und V3 wurden als 400 Mikrometer dicke Schichten auf eine Glasplatte aufgerakelt und mittels UV-Lampen (Gallium-dotierter Quecksilberlampe und undotierter Quecksilberlampe) bei einer Bandgeschwindigkeit von 5,0 m/Min und einer Strahlungsdosis von 1400 mJ/cm² vorgehärtet. Anschließend wurden die aus den erfindungsgemäßen Formulierungen 3bis10 und den Vergleichsformulierungen V2 und V3 hergestellten Vorläufer für 10 Minuten bei 180 °C in einem Umlufttrockenschrank erhitzt.

Von den so erhaltenen Beschichtungen wurde mittels des Gerätes Fischerscope H100C von Fischer Technology Inc. USA, die Mikrohärte bestimmt und mittels DIN EN ISO 14577-1b anhand der Kraft-Eindringkurve die Martenshärte errechnet und in Tabelle 4 aufgeführt.

Weiterhin wurde von den so erhaltenen Beschichtungen jeweils der optische Eindruck beschrieben und ebenfalls in Tabelle 4 aufgeführt.

Nach Aushärtung mit der genannten UV Dosis sind alle Proben standfest, das heißt auch bei senkrecht Stellen der Glasplatten ist kein Ablauf der Proben von der Glasplatte sichtbar. Die so beschriebene Standfestigkeit ist so ein Indikator für einen schnellen ausreichenden Modulaufbau, der die Herstellung eines Gegenstandes nach dem erfindungsgemäßen Verfahren ermöglicht.

**Tabelle 4**

| | 3 | 4 | 5 | 6 | 7 | 8 | 9 | V2 | V3 | 10 |
|---|---|---|---|---|---|---|---|---|---|---|
| Martenshärte [N/mm²] | 126 | 128 | 126 | 154 | 140 | 161 | 157 | spröde nicht meßbar | spröde nicht meßbar | 101 |
| optischer Eindruck | klar | klar | klar | klar | klar | klar | klar | trübe | klar | klar |

Die Ergebnisse der Tabelle 4 zeigen deutlich, dass besonders gute Ergebnisse und kompatible, klar ausgehärtete Produkte aus den erfindungsgemäßen Komponenten erzielt werden, während die Vergleichbeispiele spröde sind und häufig eintrüben. Im Unterschied zu den Vergleichsbeispielen, weisen die erfindungsgemäßen Mischungen Isocyanatgruppen und Doppelbindungsträger in zumindest einem Formulierungsbestandteil (in diesem Fall Isocyanat 1) gleichzeitig auf. Dies führt überraschenderweise, zu einer Stabilisierung der entstehenden ansonsten (wie in V2 und V3 gezeigt) inkompatiblen und unabhängigen Netzwerke aus Polyisocyanurat und Poly(meth)acrylatgruppen.

## Patentansprüche

1. Verfahren zur Herstellung eines Gegenstandes aus einem Vorläufer, umfassend die Schritte:
I) Abscheiden eines radikalisch vernetzten Harzes auf einem Träger, so dass eine Lage eines mit dem Träger verbundenen Aufbaumaterials erhalten wird, welche einem ersten ausgewählten Querschnitt des Vorläufers entspricht;
II) Abscheiden eines radikalisch vernetzten Harzes auf eine zuvor aufgetragene Lage des Aufbaumaterials, so dass eine weitere Lage des Aufbaumaterials erhalten wird, welche einem weiteren ausgewählten Querschnitt des Vorläufers entspricht und welche mit der zuvor aufgetragenen Lage verbunden ist;
III) Wiederholen des Schritts II), bis der Vorläufer gebildet ist;
wobei das Abscheiden eines radikalisch vernetzten Harzes wenigstens in Schritt II) durch Belichten und/oder Bestrahlen eines ausgewählten Bereichs eines radikalisch vernetzbaren Harzes, entsprechend dem jeweils ausgewählten Querschnitt des Vorläufers, erfolgt und
wobei das radikalisch vernetzbare Harz eine Viskosität, gemessen bei 23 °C gemäß DIN EN ISO 2884-1, von ≥ 5 mPas bis ≤ 100000 mPas aufweist,
**dadurch gekennzeichnet, dass**
das radikalisch vernetzbare Harz eine härtbare Komponente umfasst, in der NCO-Gruppen und olefinische C=C-Doppelbindungen vorliegen,
wobei in der härtbaren Komponente das molare Verhältnis von NCO-Gruppen und olefinischen C=C-Doppelbindungen in einem Bereich von ≥ 1:5 bis ≤ 5:1 liegt,
und dass nach Schritt III) weiterhin Schritt IV) durchgeführt wird:
I V) Behandeln des nach Schritt III) erhaltenen Vorläufers bei Bedingungen, die ausreichen, um im radikalisch vernetzten Harz des erhaltenen Vorläufers vorliegende NCO-Gruppen zumindest teilweise zu Isocyanurat-Gruppen zu trimerisieren, so dass der Gegenstand erhalten wird
und wobei die härtbare Komponente eine härtbare Verbindung umfasst, welche NCO-Gruppen und olefinische C=C-Doppelbindungen aufweist, wobei in der härtbaren Verbindung das molare Verhältnis von NCO-Gruppen und olefinischen C=C-Doppelbindungen in einem Bereich von ≥1:5 bis ≤ 5:1 liegt.

2. Verfahren gemäß Anspruch 1, **dadurch gekennzeichnet, dass** in der härtbaren Komponente weiterhin Isocyanurat-Gruppen vorliegen, wobei das molare Verhältnis von NCO-Gruppen zu Isocyanurat-Gruppen in einem Bereich von ≤ 100:1 bis ≥ 1:2 liegt und in der härtbaren Komponente das molare Verhältnis von olefinischen C=C-Doppelbindungen zu Isocyanurat-Gruppen in einem Bereich von ≤ 100:1 bis ≥ 1:5 liegt.

3. Verfahren gemäß Anspruch 1, **dadurch gekennzeichnet, dass** die härtbare Komponente eine härtbare Verbindung umfasst, welche Isocyanuratgruppen, NCO-Gruppen und olefinische C=C-Doppelbindungen aufweist, wobei
in der härtbaren Verbindung das molare Verhältnis von NCO-Gruppen und olefinischen C=C-Doppelbindungen in einem Bereich von ≥1:5 bis ≤ 5:1 liegt,
in der härtbaren Verbindung das molare Verhältnis von NCO-Gruppen zu Isocyanurat-Gruppen in einem Bereich von ≤ 100:1 bis ≥ 1:2 liegt und
in der härtbaren Verbindung das molare Verhältnis von olefinischen C=C-Doppelbindungen zu Isocyanurat-Gruppen in einem Bereich von ≤ 100:1 bis ≥ 1:5 liegt.

4. Verfahren gemäß einem der Ansprüche 1 bis 3, **dadurch gekennzeichnet, dass** das radikalisch vernetzbare Harz weiterhin einen Radikalstarter und/oder einen Isocyanat-Trimerisierungskatalysator umfasst.

5. Verfahren gemäß Anspruch 4, **dadurch gekennzeichnet, dass** mindestens ein Radikalstarter ausgewählt ist aus der Gruppe: α-Hydroxyphenylketon, Benzyldimethylketal,2,4,6-Trimethylbenzoyldiphenylphosphinoxid, Bis-(4-methoxybenzoyl)diethylgerman und einer Kombination aus mindestens zwei hiervon
und/oder
der Isocyanurat-Trimerisierungskatalysator ausgewählt ist aus: Kaliumacetat, Kaliumacetat in Kombination mit einem Kronenether, Kaliumacetat in Kombination mit einem Polyethylenglykol, Kaliumacetat in Kombination mit einem Polypropylenglykol, Zinnoctoat, Natriumphenolat, Kaliumhydroxid, Trioctylphosphin und/oder Tributylzinnoxid.

6. Verfahren gemäß einem der Ansprüche 1 bis 5, **dadurch gekennzeichnet, dass** in dem Harz das molare Verhältnis von NCO-Gruppen zu Zerewitinoff-aktiven H-Atomen ≥ 500 beträgt.

7. Verfahren gemäß einem der Ansprüche 1 bis 7, **dadurch gekennzeichnet, dass** die härtbare Komponente ein zahlenmittleres Molekulargewicht Mₙ von ≥ 200 g/mol bis ≤ 5000 g/mol aufweist.

8. Verfahren gemäß einem der Ansprüche 1 bis 7, **dadurch gekennzeichnet, dass** in Schritt IV) das Behandeln des nach Schritt III) erhaltenen Vorläufers bei Bedingungen, die ausreichen, um im radikalisch vernetzten Harz des erhaltenen Vorläufers vorliegende NCO-Gruppen zumindest teilweise zu Isocyanurat-Gruppen zu trimerisieren, ein Erwärmen des Körpers auf eine Temperatur von ≥ 60°C umfasst.

9. Verfahren gemäß einem der Ansprüche 1 bis 8, **dadurch gekennzeichnet, dass** die Oberfläche des nach Schritt III) erhaltenen Vorläufers und/oder des nach Schritt IV) erhaltenen Gegenstands mit einer Zerewitinoff-aktive H-Atome aufweisenden Verbindung kontaktiert wird, wobei als natürliche Luftfeuchtigkeit in der den Vorläufer und/oder den Gegenstand umgebenden Atmosphäre vorkommendes Wasser ausgenommen ist.

10. Verfahren gemäß einem der Ansprüche 1 bis 9, **dadurch gekennzeichnet, dass**:
- der Träger innerhalb eines Behälters angeordnet ist und vertikal in Schwerkraftrichtung absenkbar ist,
- der Behälter das radikalisch vernetzbare Harz in einer Menge enthält, welche ausreicht, um wenigstens den Träger und auf dem Träger abgeschiedenes vernetztes Harz zu bedecken,
- vor jedem Schritt II) der Träger um eine vorbestimmte Strecke abgesenkt wird, so dass über der in vertikaler Richtung gesehen obersten Lage des Aufbaumaterials sich eine Schicht des radikalisch vernetzbaren Harzes bildet und
- in Schritt II) ein Energiestrahl den ausgewählten Bereich der Schicht des radikalisch vernetzbaren Harzes, entsprechend dem jeweils ausgewählten Querschnitt des Vorläufers, belichtet und/oder bestrahlt.

11. Verfahren gemäß einem der Ansprüche 1 bis 9, **dadurch gekennzeichnet, dass**:
- der Träger innerhalb eines Behälters angeordnet ist und vertikal entgegen der Schwerkraftrichtung anhebbar ist,
- der Behälter das radikalisch vernetzbare Harz bereitstellt,
- vor jedem Schritt II) der Träger um eine vorbestimmte Strecke angehoben wird, so dass unter der in vertikaler Richtung gesehen untersten Lage des Aufbaumaterials sich eine Schicht des radikalisch vernetzbaren Harzes bildet und
- in Schritt II) eine Mehrzahl von Energiestrahlen den ausgewählten Bereich der Schicht des radikalisch vernetzbaren Harzes, entsprechend dem jeweils ausgewählten Querschnitt des Vorläufers, gleichzeitig belichtet und/oder bestrahlt.

12. Verfahren gemäß einem der Ansprüche 1 bis 9, **dadurch gekennzeichnet, dass**:
- in Schritt II) das radikalisch vernetzbare Harz aus einem oder mehreren Druckköpfen, entsprechend dem jeweils ausgewählten Querschnitt des Vorläufers, aufgetragen wird und anschließend belichtet und/oder bestrahlt wird.

13. Verwendung eines radikalisch vernetzbaren Harzes, welches eine Viskosität, gemessen bei 23 °C gemäß DIN EN ISO 2884-1, von ≥ 5 mPas bis ≤ 100000 mPas aufweist, in einem additiven Fertigungsverfahren,
**dadurch gekennzeichnet, dass**
das Harz eine härtbare Verbindung umfasst, welche Isocyanuratgruppen, NCO-Gruppen und olefinische C=C-Doppelbindungen aufweist,
wobei das molare Verhältnis von NCO-Gruppen und olefinischen C=C-Doppelbindungen in einem Bereich von ≥1:5 bis ≤ 5:1 liegt,
in der härtbaren Verbindung das molare Verhältnis von NCO-Gruppen zu Isocyanurat-Gruppen in einem Bereich von ≤ 100:1 bis ≥ 1:2 liegt und
in der härtbaren Verbindung das molare Verhältnis von olefinischen C=C-Doppelbindungen zu Isocyanurat-Gruppen in einem Bereich von ≤ 100:1 bis ≥ 1:5 liegt.

14. Polymer, erhältlich durch die Vernetzung eines Harzes, welches eine Viskosität, gemessen bei 23 °C gemäß DIN EN ISO 2884-1, von ≥ 5 mPas bis ≤ 100000 mPas aufweist,
**dadurch gekennzeichnet, dass**
das Harz eine härtbare Komponente umfasst, welche NCO-Gruppen und olefinische C=C-Doppelbindungen aufweist, wobei das molare Verhältnis von NCO-Gruppen und olefinischen C=C-Doppelbindungen in einem Bereich von ≥1:5 bis ≤ 5:1 liegt,
wobei die härtbare Komponente eine härtbare Verbindung umfasst, welche NCO-Gruppen und olefinische C=C-Doppelbindungen aufweist, wobei in der härtbaren Verbindung das molare Verhältnis von NCO-Gruppen und olefinischen C=C-Doppelbindungen in einem Bereich von ≥1:5 bis ≤ 5:1 liegt und dass
die Vernetzung durch ein zweistufiges Verfahren aus radikalischer Vernetzung der C=C-Doppelbindungen, gefolgt von Trimerisierung der NCO-Gruppen zu Isocyanuratgruppen, erfolgt.

## Claims

1. Process for producing an object from a precursor, comprising the steps of:
I) depositing a radically crosslinked resin atop a carrier to obtain a ply of a construction material joined to the carrier which corresponds to a first selected cross section of the precursor;
II) depositing a radically crosslinked resin atop a previously applied ply of the construction material to obtain a further ply of the construction material which corresponds to a further selected cross section of the precursor and which is joined to the previously applied ply;
III) repeating step II) until the precursor is formed;
wherein the depositing of a radically crosslinked resin at least in step II) is effected by introducing energy to a selected region of a radically crosslinkable resin corresponding to the respectively selected cross section of the object, and
wherein the radically crosslinkable resin has a viscosity measured at 23°C according to DIN EN ISO 2884-1 of ≥ 5 mPas to ≤ 100 000 mPas,
**characterized in that**
the radically crosslinkable resin comprises a curable component comprising NCO groups and olefinic C=C double bonds,
wherein in the curable component the molar ratio of NCO groups to olefinic C=C double bond is in a range from ≥ 1:5 to ≤ 5:1,
and **in that** step III) is followed by a further step IV) :
IV) treating the precursor obtained after step III) under conditions sufficient for at least partially trimerizing NCO groups present in the radically crosslinked resin of the obtained precursor to afford isocyanurate groups to obtain the object
and wherein the curable component comprises a curable compound comprising NCO groups and olefinic C=C double bonds, wherein in the curable component the molar ratio of NCO groups to olefinic C=C double bonds is in a range from ≥ 1:5 to ≤ 5:1

2. Process according to claim 1, **characterized in that** the curable component further comprises isocyanurate groups, wherein the molar ratio of NCO groups to isocyanurate groups is in a range from ≤ 100:1 to ≥ 1:2 and in the curable component the molar ratio of olefinic C=C double bonds to isocyanurate groups in a range from ≤ 100:1 to ≥ 1:5.

3. Process according to claim 1, **characterized in that** the curable component comprises a curable compound comprising isocyanurate groups, NCO groups and olefinic C=C double bonds, wherein
in the curable compound the molar ratio of NCO groups to olefinic C=C double bonds is in a range from ≥ 1:5 to ≤ 5:1,
in the curable compound the molar ratio of NCO groups to isocyanurate groups is in a range from ≤ 100:1 to ≥ 1:2 and
in the curable compound the molar ratio of olefinic C=C double bonds to isocyanurate groups is in a range from ≤ 100:1 to ≥ 1:5.

4. Process according to in any of claims 1 to 3, **characterized in that** the radically crosslinkable resin further a radical starter and/or an isocyanate trimerization catalyst.

5. Process according to claim 4, **characterized in that** at least one radical starter is selected from the group: α-hydroxyphenylketone, benzyldimethylketal 2,4,6-trimethylbenzoyldiphenylphosphine oxide, bis(4-methoxybenzoyl)diethylgermanium and a combination of at least two thereof
and/or
the isocyanurate trimerization catalyst is selected from: potassium acetate, potassium acetate in conjunction with a crown ether, potassium acetate in conjunction with a polyethylene glycol, potassium acetate in conjunction with a polypropylene glycol, zinc octoate, sodium phenoxide, potassium hydroxide, trioctyl phosphine and/or tributyltin oxide.

6. Process according to any of claims 1 to 5, **characterized in that**, in the resin, the molar ratio of NCO groups to Zerewitinoff-active H atoms is ≥ 500.

7. Process according to any of claims 1 to 7, **characterized in that** the curable component has a number-average molecular weight Mₙ of ≥ 200 g/mol to ≤ 5000 g/mol.

8. Process according to any of claims 1 to 7, **characterized in that** in step IV) the treating of the precursor obtained after step III) under conditions sufficient for at least partially trimerizing NCO groups present in the radically crosslinked resin of the obtained precursor to afford isocyanurate groups comprises a heating of the body to a temperature of ≥ 60°C.

9. Process according to any of claims 1 to 8, **characterized in that** the surface of the precursor obtained after step III) and/or of the object obtained after step IV) is contacted with a compound comprising Zerewitinoff-active H atoms, wherein water occurring as natural atmospheric humidity in the atmosphere surrounding the precursor and/or the object is excluded.

10. Process according to any of claims 1 to 9, **characterized in that**:
- the carrier is arranged inside a container and is vertically lowerable in the direction of the gravitational force,
- the container contains the radically crosslinkable resin in an amount sufficient to cover at least the carrier and crosslinked resin deposited on the carrier,
- before each step II) the carrier is lowered by a predetermined distance so that above the uppermost ply of the construction material viewed in the vertical direction a layer of the radically crosslinkable resin is formed and
- in step II) an energy beam exposes and/or irradiates the selected region of the layer of the radically crosslinkable resin corresponding to the respectively selected cross section of the object.

11. Process according to any of claims 1 to 9, **characterized in that**:
- the carrier is arranged inside a container and is vertically raisable counter to the direction of the gravitational force,
- the container provides the radically crosslinkable resin,
- before each step II) the carrier is raised by a predetermined distance so that below the lowermost ply of the construction material viewed in the vertical direction a layer of the radically crosslinkable resin is formed and
- in step II) a plurality of energy beams simultaneously exposes and/or irradiates the selected region of the layer of the radically crosslinkable resin corresponding to the respectively selected cross section of the object.

12. Process according to any of claims 1 to 9, **characterized in that**:
- in step II) the radically crosslinkable resin is applied corresponding to the respectively selected cross section of the object from one or more printing heads and subsequently exposed and/or irradiated.

13. Use of a radically crosslinkable resin having a viscosity measured at 23°C according to DIN EN ISO 2884-1 of ≥ 5 mPas to ≤ 100 000 mPas in an additive manufacturing process,
**characterized in that**
the resin comprises a curable compound comprising isocyanurate groups, NCO groups and olefinic C=C double bonds,
wherein the molar ratio of NCO groups to olefinic C=C double bonds is in a range from ≥ 1:5 to ≤ 5:1,
in the curable compound the molar ratio of NCO groups to isocyanurate groups is in a range from ≤ 100:1 to ≥ 1:2 and
in the curable compound the molar ratio of olefinic C=C double bonds to isocyanurate groups is in a range from ≤ 100:1 to ≥ 1:5.

14. Polymer obtainable by the crosslinking of a resin having a viscosity measured at 23°C according to DIN EN ISO 2884-1 of ≥ 5 mPas to ≤ 100 000 mPas,
**characterized in that**
the resin comprises a curable component comprising NCO groups and olefinic C=C double bonds, wherein the molar ratio of NCO groups to olefinic C=C double bond is in a range from ≥ 1:5 to ≤ 5:1,
wherein the curable component comprises a curable compound comprising NCO groups and olefinic C=C double bonds, wherein in the curable component the molar ratio of NCO groups to olefinic C=C double bonds is in a range from ≥ 1:5 to ≤ 5:1, and **in that**
the crosslinking is effected by a two-stage process of radical crosslinking of the C=C double bonds followed by trimerization of the NCO groups to afford isocyanurate groups.

## Revendications

1. Procédé pour la préparation d'un objet à partir d'un précurseur, comprenant les étapes :
I) dépôt d'une résine réticulée de manière radicalaire sur un support, de sorte qu'une couche d'un matériau de construction relié au support est obtenue, qui correspond à une première section transversale choisie du précurseur ;
II) dépôt d'une résine réticulée de manière radicalaire sur une couche appliquée précédemment du matériau de construction, de sorte qu'une couche supplémentaire du matériau de construction est obtenue, qui correspond à une section transversale choisie supplémentaire du précurseur et qui est reliée avec la couche appliquée précédemment ;
III) répétition de l'étape II), jusqu'à ce que le précurseur soit formé ;
le dépôt d'une résine réticulée de manière radicalaire au moins dans l'étape II) étant réalisé par l'éclairement et/ou l'irradiation d'une zone choisie d'une résine réticulable de manière radicalaire, de manière correspondant à la section transversale à chaque fois choisie du précurseur, et
la résine réticulable de manière radicalaire présentant une viscosité, mesurée à 23 °C selon la norme DIN EN ISO 2884-1, de ≥ 5 mPas à ≤ 100 000 mPas,
**caractérisé en ce que** la résine réticulable de manière radicalaire comprend un composant durcissable dans lequel des groupes NCO et des doubles liaisons oléfiniques C=C sont présents,
le rapport molaire des groupes NCO et des doubles liaisons oléfiniques C=C dans le composant durcissable se situant dans la plage de ≥ 1:5 à ≤ 5:1,
et **en ce qu'**après l'étape III), l'étape IV) est en outre mise en œuvre :
IV) traitement du précurseur obtenu après l'étape III) dans des conditions qui suffisent pour trimériser au moins partiellement les groupes NCO présents dans la résine réticulée de manière radicalaire du précurseur obtenu en groupes isocyanurate, de sorte que l'objet est obtenu
et le composant durcissable comprenant un composé durcissable qui présente des groupes NCO et des doubles liaisons oléfiniques C=C, le rapport molaire des groupes NCO et des doubles liaisons oléfiniques C=C dans le composé durcissable se situant dans la plage de ≥ 1:5 à ≤ 5:1.

2. Procédé selon la revendication 1, **caractérisé en ce que** des groupes isocyanurate sont en outre présents dans le composant durcissable, le rapport molaire des groupes NCO aux groupes isocyanurate se situant dans une plage de ≤ 100:1 à ≥ 1:2 et le rapport molaire des doubles liaisons oléfiniques C=C aux groupes isocyanurate dans le composant durcissable se situant dans la plage de ≤ 100:1 à ≥ 1:5.

3. Procédé selon la revendication 1, **caractérisé en ce que** le composant durcissable comprend un composé durcissable qui présente des groupes isocyanurate, des groupes NCO et des doubles liaisons oléfiniques C=C,
le rapport molaire des groupes NCO et des doubles liaisons oléfiniques C=C dans le composé durcissable se situant dans la plage de ≥ 1:5 à ≤ 5:1,
le rapport molaire des groupes NCO aux groupes isocyanurate dans le composé durcissable se situant dans une plage de ≤ 100:1 à ≥ 1:2 et
le rapport molaire des doubles liaisons oléfiniques C=C aux groupes isocyanurate dans le composé durcissable se situant dans la plage de ≤ 100:1 à ≥ 1:5.

4. Procédé selon l'une quelconque des revendications 1 à 3, **caractérisé en ce que** la résine réticulable de manière radicalaire comprend en outre un initiateur de radicaux et/ou un catalyseur de trimérisation d'isocyanate.

5. Procédé selon la revendication 4, **caractérisé en ce qu'**au moins un initiateur de radicaux est choisi dans le groupe : α-hydroxyphénylcétone, diméthylcétal du benzyle, oxyde de 2,4,6-triméthylbenzoyldiphénylphosphine, bis-(4-méthoxybenzoyl)diéthylgermane et une combinaison d'au moins deux de ceux-ci
et/ou
le catalyseur de trimérisation d'isocyanurate est choisi parmi : acétate de potassium, acétate de potassium en combinaison avec un éther couronne, acétate de potassium en combinaison avec un polyéthylène glycol, acétate de potassium en combinaison avec un polypropylèneglycol, octoate d'étain, phénolate de sodium, hydroxyde de potassium, trioctylphosphine et/ou oxyde de tributylétain.

6. Procédé selon l'une quelconque des revendications 1 à 5, **caractérisé en ce que** dans la résine, le rapport molaire des groupes NCO sur les atomes de H actifs selon Zéréwitinoff est ≥ 500.

7. Procédé selon l'une quelconque des revendications 1 à 7, **caractérisé en ce que** le composant durcissable présente un poids moléculaire moyen en nombre Mₙ de ≥ 200 g/mole à ≤ 5 000 g/mole.

8. Procédé selon l'une quelconque des revendications 1 à 7, **caractérisé en ce que** dans l'étape IV), le traitement du précurseur obtenu après l'étape III) dans des conditions qui suffisent pour trimériser au moins partiellement des groupes NCO présents dans la résine réticulée de manière radicalaire du précurseur obtenu en groupes isocyanurate, comprend un chauffage du corps à une température de ≥ 60 °C.

9. Procédé selon l'une quelconque des revendications 1 à 8, **caractérisé en ce que** la surface du précurseur obtenu après l'étape III) et/ou de l'objet obtenu après l'étape IV) est mise en contact avec un composé présentant des atomes de H actifs selon Zéréwitinoff, l'eau présente en tant qu'humidité naturelle de l'air dans l'atmosphère entourant le précurseur et/ou l'objet étant exclue.

10. Procédé selon l'une quelconque des revendications 1 à 9, **caractérisé en ce que** :
- le support est disposé à l'intérieur d'un récipient et est abaissable verticalement dans la direction de la pesanteur,
- le récipient contient la résine réticulable de manière radicalaire en une quantité qui suffit pour recouvrir au moins le support et la résine réticulée déposée sur le support,
- avant chaque étape II), le support est abaissé d'une distance prédéterminée, de sorte que sur la couche supérieure du matériau de construction du point de vue d'une direction verticale, une couche de la résine réticulable de manière radicalaire se forme et
- dans l'étape II), un rayonnement d'énergie éclaire et/ou irradie la zone choisie de la couche de la résine réticulable de manière radicalaire, de manière correspondant à la section transversale à chaque fois choisie du précurseur.

11. Procédé selon l'une quelconque des revendications 1 à 9, **caractérisé en ce que**
- le support est disposé à l'intérieur d'un récipient et peut être soulevé verticalement dans le sens contraire de la direction de la pesanteur,
- le récipient met à disposition la résine réticulable de manière radicalaire,
- avant chaque étape II), le support est relevé d'une distance prédéterminée, de sorte que sous la couche la plus inférieure du matériau de construction du point de vue d'une direction verticale, une couche de la résine réticulable de manière radicalaire se forme et
- dans l'étape II), une pluralité de rayonnements d'énergie éclaire et/ou irradie simultanément la zone choisie de la couche de la résine réticulable de manière radicalaire, de manière correspondant à la section transversale à chaque fois choisie du précurseur.

12. Procédé selon l'une quelconque des revendications 1 à 9, **caractérisé en ce que** :
- dans l'étape II), la résine réticulable de manière radicalaire est déposée à partir d'une ou plusieurs têtes d'impression, de manière correspondant à la section transversale à chaque fois choisie du précurseur et ultérieurement est éclairée et/ou irradiée.

13. Utilisation d'une résine réticulable de manière radicalaire qui présente une viscosité mesurée à 23 °C selon la norme DIN EN ISO 2884-1, de ≥ 5 mPas à ≤ 100 000 mPas, dans un procédé de fabrication additif,
**caractérisée en ce que** la résine comprend un composé durcissable qui présente des groupes isocyanurate, des groupes NCO et des doubles liaisons oléfiniques C=C,
le rapport molaire des groupes NCO et des doubles liaisons oléfiniques C=C se situant dans la plage de ≥ 1:5 à ≤ 5:1,
le rapport molaire des groupes NCO aux groupes isocyanurate dans le composé durcissable se situant dans une plage de ≤ 100:1 à ≥ 1:2 et
le rapport molaire des doubles liaisons oléfiniques C=C aux groupes isocyanurate dans le composé durcissable se situant dans la plage de ≤ 100:1 à ≥ 1:5.

14. Polymère pouvant être obtenu par la réticulation d'une résine qui présente une viscosité mesurée à 23 °C selon la norme DIN EN ISO 2884-1, de ≥ 5 mPas à ≤ 100 000 mPas,
**caractérisé en ce que**
la résine comprend un composant durcissable qui présente des groupes NCO et des doubles liaisons oléfiniques C=C, le rapport molaire des groupes NCO et des doubles liaisons oléfiniques C=C se situant dans la plage de ≥ 1:5 à ≤ 5:1,
le composant durcissable comprenant un composé durcissable qui présente des groupes NCO et des doubles liaisons oléfiniques C=C, le rapport molaire des groupes NCO et des doubles liaisons oléfiniques C=C dans le composé durcissable se situant dans la plage de ≥ 1:5 à ≤ 5:1, et **en ce que**
la réticulation est réalisée par un procédé en deux étapes de réticulation de manière radicalaire des doubles liaisons C=C, suivie par une trimérisation des groupes NCO en groupes isocyanurate.
